(19) Europäisches Patentamt / European Patent Office / Office européen des brevets

(11) **EP 2 423 562 A1**

(12) **EUROPEAN PATENT APPLICATION**
published in accordance with Art. 153(4) EPC

(43) Date of publication:
**29.02.2012  Bulletin 2012/09**

(51) Int Cl.:
*F21S 2/00* (2006.01)      *G02F 1/13357* (2006.01)
*F21Y 103/00* (2006.01)

(21) Application number: **10783199.2**

(22) Date of filing: **12.03.2010**

(86) International application number:
**PCT/JP2010/054194**

(87) International publication number:
**WO 2010/140413 (09.12.2010 Gazette 2010/49)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority:  **03.06.2009  JP 2009134190**

(71) Applicant: **Sharp Kabushiki Kaisha
Osaka-shi, Osaka 545-8522 (JP)**

(72) Inventor: **KUROMIZU, Yasumori
Osaka-shi, Osaka 545-8522 (JP)**

(74) Representative: **Müller-Boré & Partner
Patentanwälte
Grafinger Straße 2
81671 München (DE)**

(54)    **ILLUMINATING DEVICE, DISPLAY DEVICE AND TELEVISION DEVICE**

(57)    A backlight device 12 includes a hot cathode tube 17, a chassis 14, a diffuser 30 and a support member 20. The chassis 14 houses the hot cathode tube 17 and has an opening 14b for light from the hot cathode tube 17 to pass through. The diffuser 30 is provided to face the hot cathode tube 17 and cover the opening 14b. The support member 20 supports the diffuser 30 on a side close to the hot cathode tube 17. The chassis 14 includes a portion that faces the diffuser 30 and is defined in a light source installation area LA in which the hot cathode tube 17 is arranged and an empty area LN in which no hot cathode tube 17 is arranged. The diffuser 30 has light reflectance higher in a light source overlapping portion DA than in a empty area overlapping portion DN. The diffuser 30 has maximum light reflectance Rmax and minimum light reflectance Rmin, and the support member 20 is provided in a portion that overlaps a portion of the diffuser 30 having light reflectance R that satisfies a formula (1).

FIG.6

**Description**

TECHNICAL FIELD

The present invention relates to a lighting device, a display device and a television receiver.

BACKGROUND ART

A liquid crystal panel included in a liquid crystal display device does not emit light, and thus a backlight device is required as a separate lighting device. The backlight device is arranged behind the liquid crystal panel (i.e., on a side opposite from a display surface side). It includes a chassis having an opening on a liquid crystal panel side, light sources (such as cold cathode tubes) accommodated in the chassis, an optical member (a diffuser and the like) provided at the opening of the chassis for efficiently directing light emitted from the light sources to a liquid crystal panel, and a support member for supporting the optical member on a light source side at a portion corresponding to a middle portion of a display screen. Patent document 1 discloses such a backlight device.

[Patent Document 1] Japanese Unexamined Patent Publication No. 2006-114445

Problem to be Solved by the Invention

In such a backlight device, the support member is provided in a space within the chassis so as to extend to the optical member. Therefore, a part of rays of light emitted from the light sources and directed to the optical member may be blocked by the support member. An amount of rays of light transmitting through the optical member is likely to be small in a specific portion of the optical member corresponding to the support member. This may cause partially formed dark portions.

DISCLOSURE OF THE PRESENT INVENTION

The present invention was made in view of the foregoing circumstances. An object of the present invention is to suppress occurrence of uneven brightness.

Means for Solving the Problem

To solve the above problem, a lighting device of the present invention includes a light source, a chassis configured to house the light source and have an opening for light from the light source to pass through, an optical member provided to face the light source and cover the opening, and a support member configured to support the optical member on a side close to the light source. The chassis includes a portion that faces the optical member and is defined in a light source installation area in which the light source is arranged and an empty area in which no light source is arranged. The optical member has a surface that faces the light source and at least the surface of the optical member that overlaps the light source installation area has light reflectance higher than at least the surface of the optical member that overlaps the empty area. The surface of the optical member that faces the light source has maximum light reflectance $R_{max}$ and minimum light reflectance $R_{min}$, and the support member is provided in a portion that overlaps a portion of the optical member having light reflectance $R$ that satisfies a following formula (1).

$$[\text{formula (1)}]$$

$$(R_{max} - R_{min}) / 2 + R_{min} > R$$

With such a configuration, the light emitted from the light source first reaches the portion of the optical member that has relatively high light reflectance and most of the light is reflected by (does not transmit through) the portion having high light reflectance. This suppresses brightness of illumination light with respect to the amount of light emitted from the light source. On the other hand, the light that reflects off the portion having high light reflectance is further reflected in the chassis and the light reaches the empty area. The light reflectance of the portion of the optical member that overlaps the empty area is relatively low and a larger amount of light passes through the portion and thus predetermined brightness of illumination light is achieved.

The light reflectance of the optical member is set as described above and this mostly achieves uniform amount of rays of light directing toward the optical member within the chassis. However, it is difficult to achieve a completely uniform amount of rays of light. It is likely to happen that the light source installation area has the amount of rays of light directing toward the optical member within the chassis greater than the empty area. Therefore, the amount of rays of light directing toward the optical member within the chassis is relatively smaller in the portion of the optical member that overlaps the portion having the light reflectance R satisfying the above formula (1) than the portion of the optical member that overlaps the portion having the light reflectance that does not satisfy the above formula (1). In the present invention, the support member is provided in the portion of the optical member that overlaps the portion having the light reflectance R satisfying the above formula (1). Even if some of the light directing toward the optical member within the chassis is blocked by the support member, the difference in the amount of rays of light transmitting through the portion in which light is blocked by the support member and the portion in which light is not blocked by the support member is less likely to be caused. Accordingly, unevenness is less likely to be caused in the brightness distribution of illumination light exited from the optical member.

According to the present invention, the arrangement of the support member is altered to achieve a uniform brightness distribution of illumination light. Compared to the case in which a configuration of the optical member is altered, a cost can be reduced.

The following configurations may be preferable.

(1) The chassis may have a surface facing the optical member and at least the surface includes a first end portion, a second end portion, and a middle portion. The second end portion may be located at an end away from the first end portion, and the middle portion may be located between the first end portion and the second end portion. The middle portion may be configured as the light source installation area, and the first end portion and the second end portion may be configured as the empty areas. This configuration ensures sufficient brightness in the middle portion of the lighting device and ensures brightness in a middle portion of a display screen of the display device including the lighting device. Accordingly, good visibility is obtained.

(2) The optical member may be configured such that the light reflectance of the surface that faces the light source decreases as is further away from the light source. With this configuration, a moderate brightness distribution of illumination light exited from the optical member is achieved in the portion overlapping the light source installation area and the portion overlapping the empty area.

(3) The support member may be provided in the empty area. The amount of light within the chassis is relatively smaller in the empty area than the light source installation area in the chassis. Therefore, the support member provided in the empty area is less likely to cause the difference in the amount of rays of light transmitting through the portion in which light is blocked by the support member and the portion in which light is not blocked by the support member. Accordingly, unevenness is less likely to be caused in the brightness distribution of illumination light exited from the optical member.

(4) The optical member may include a light reflecting portion on the surface that faces the light source, and the light reflecting portion may be configured to reflect light. With this configuration, light reflectance of the surface of the optical member that faces the light source is appropriately controlled by changing a pattern of the light reflecting portion.

(5) The light reflecting portion may be configured to be formed in substantially a point-like shape in a surface area of the optical member that faces the light source and may be configured by a plurality of dots having light reflectivity. With this configuration, the light reflectance is easily controlled by changing a pattern form of the dots (an area, a distribution density).

(6) The optical member may be formed in a rectangular shape with plan view. The support member may include at least two support members and the support members may be arranged in the chassis in a line that is slanted with respect to each side of the optical member. With this configuration, compared to an arrangement in which the support members are linearly aligned along a line parallel to one of the sides of the optical member, the support members are less likely to be recognized.

(7) The support member may include a main body and a support portion. The main body may extend along the chassis and the support portion may project from the main body toward the optical member and may be configured to come in contact with a surface of the optical member that faces the light source. With this configuration, the main body extending along the chassis stabilizes the mounting condition of the support member with respect to the chassis. The support portion projecting from the main body toward the optical member side effectively supports the optical member.

(8) At least the support portion of the support member is provided to overlap a portion of the optical member having the light reflectance that satisfies the formula (1). The light directing toward the optical member within the chassis is easily blocked by the support portion of the support member that can be contacted directly to the optical member. However, the support portion is provided to overlap the portion of the optical member having the light reflectance R that satisfies the above formula (1). This reduces the amount of light that is blocked by the support portion and achieves the uniform amount of transmitted light more effectively.

(9) The support portion may be formed in substantially a point-like shape in a surface area of the optical member. Accordingly, compared to a case in which the support portion is formed in a line or a plane in a surface area of the optical member, the light emitted from the light source and directed to the optical member is less likely to be blocked by the support portion and this preferably suppress occurrence of uneven brightness.

(10) The support portion may be formed to be tapered. With this configuration, light heading from the light source to the optical member is less likely to be blocked by the support member and accordingly uneven brightness is less likely to be caused.

(11) The chassis may be formed in a rectangular shape with plan view. The light source may be formed to extend in a long-side direction of the chassis, and the light source installation area and the empty area may be provided in a short-side direction of the chassis. With this configuration, a linear light source can be preferably used.

(12) The support member may have a surface that provides white. With this configuration, light is effectively reflected by the surface of the support member, and therefore, light from the light source is effectively used.

(13) The light source may be a hot cathode tube. This improves brightness.

(14) The light source may be a cold cathode tube. This extends life of the light source and dimming is easily performed.

(15) The light source may be an LED. This extends life of the light source and reduces consumption power.

Next, to solve the above problem, a display device of the present invention includes the lighting device described above and a display panel configured to provide display using light from the lighting device.

According to such a display device, the lighting device that supplies light to the display panel is less likely to cause uneven brightness, and this achieves display with excellent display quality.

The display panel may be a liquid crystal display panel. The display device as a liquid crystal display device has a variety of applications, such as a television display or a personal-computer display. Particularly, it is suitable for a large screen display.

Advantageous Effect of the Invention

According to the present invention, uneven brightness is less likely to be caused.

BRIEF DESCRIPTION OF THE DRAWINGS

FIG. 1 is an exploded perspective view illustrating a general construction of a television receiver according to a first embodiment of the present invention;

FIG. 2 is an exploded perspective view illustrating a general construction of a liquid crystal display device provided in the television receiver;

FIG. 3 is a cross-sectional view of the liquid crystal display device along the short-side direction;

FIG. 4 is a cross-sectional view of the liquid crystal display device along the long-side direction;

FIG. 5 is a plan view illustrating an arrangement configuration of a hot cathode tube, support members and a chassis provided in the liquid crystal display device;

FIG. 6 is a plan view explaining a light reflectance distribution of a diffuser;

FIG. 7 is an enlarged plan view illustrating a general construction of a surface of the diffuser that faces the hot cathode tube;

FIG. 8 is a graph illustrating a light reflectance change in a short-side direction of the diffuser along a viii-viii line in FIG. 6;

FIG. 9 is a graph illustrating a light reflectance change in a long-side direction of the diffuser along a ix-ix line in FIG. 6;

FIG. 10 is a plan view illustrating a light reflectance distribution of a diffuser according to a first modification of the first embodiment;

FIG. 11 is a graph illustrating a light reflectance change in a short-side direction of the diffuser along a xi-xi line in FIG. 10;

FIG. 12 is a plan view illustrating a light reflectance distribution of a diffuser according to a second modification of the first embodiment;

FIG. 13 is a graph illustrating a light reflectance change in a short-side direction of the diffuser along a xiii-xiii line in FIG. 12;

FIG. 14 is an exploded perspective view illustrating a general construction of a liquid crystal display device according to a second embodiment of the present invention;

FIG. 15 is a cross-sectional view of the liquid crystal display device along the short-side direction;

FIG. 16 is a cross-sectional view of the liquid crystal display device along the long-side direction;

FIG. 17 is a plan view illustrating an arrangement configuration of cold cathode tubes, support members and a chassis provided in the liquid crystal display device;

FIG. 18 is a plan view explaining a light reflectance distribution of a diffuser;

FIG. 19 is a graph illustrating a light reflectance change in a short-side direction of the diffuser along a xix-xix line in FIG. 18;

FIG. 20 is an exploded perspective view illustrating a general construction of a liquid crystal display device according to a third embodiment of the present invention;

FIG. 21 is a cross-sectional view of the liquid crystal display device along the short-side direction;

FIG. 22 is a cross-sectional view of the liquid crystal display device along the long-side direction;

FIG. 23 is a plan view illustrating an arrangement configuration of LEDs (an LED board), support members and a chassis provided in the liquid crystal display device; and

FIG. 24 is a plan view illustrating a light reflectance distribution of a diffuser.

BEST MODE FOR CARRYING OUT THE INVENTION

<First Embodiment>

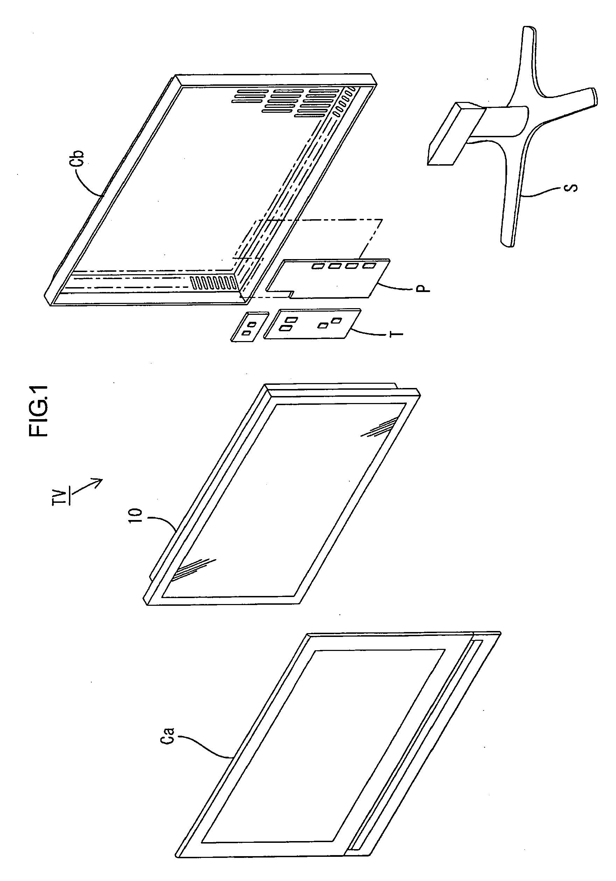

The first embodiment of the present invention will be explained with reference to FIGS. 1 to 9. First, a construction of a television receiver TV including a liquid crystal display device 10 will be explained.

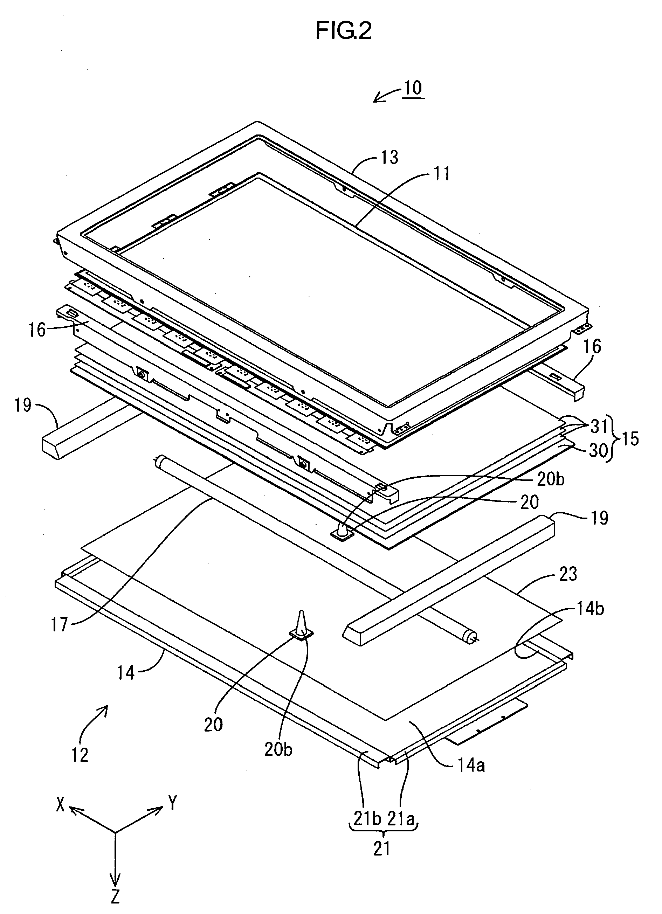

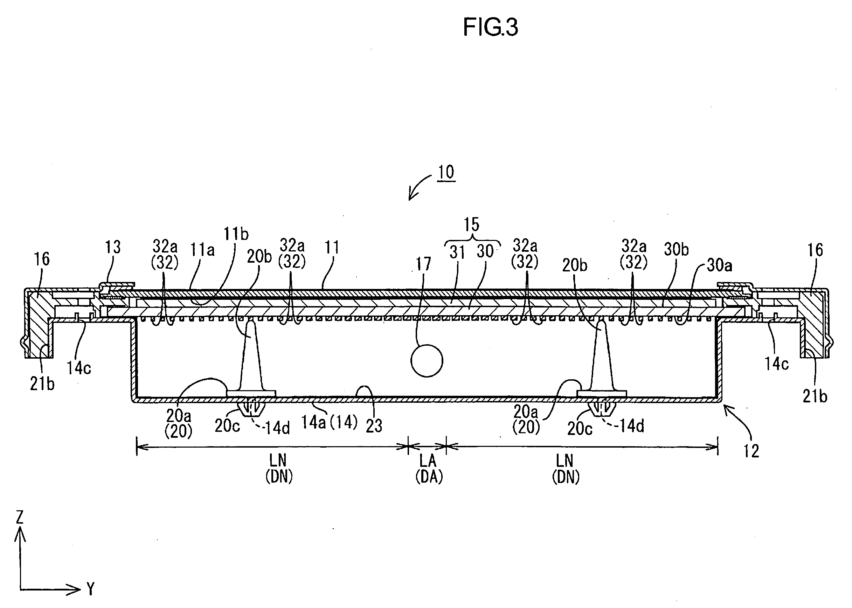

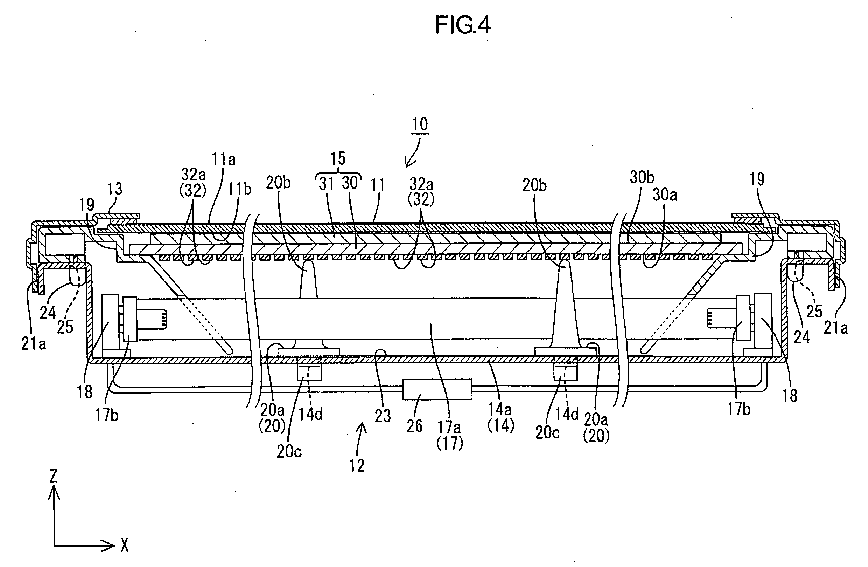

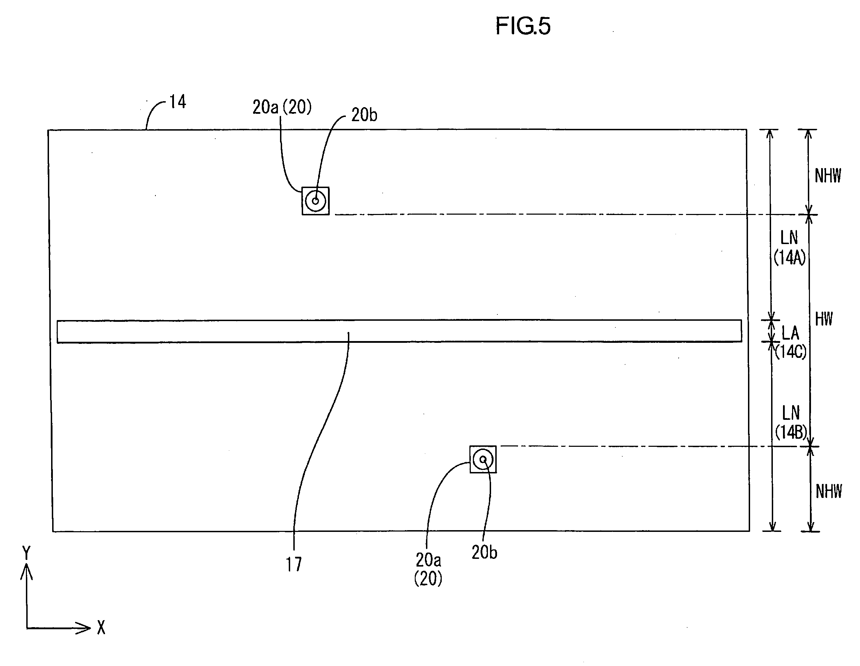

FIG. 1 is an exploded perspective view illustrating a general construction of the television receiver according to the present embodiment. FIG. 2 is an exploded perspective view illustrating a general construction of a liquid crystal display device provided in the television receiver in FIG. 1. FIG. 3 is a cross-sectional view of the liquid crystal display device in FIG. 2 along the short-side direction. FIG. 4 is a cross-sectional view of the liquid crystal display device in FIG. 2 along the long-side direction. FIG. 5 is a plan view illustrating an arrangement configuration of a hot cathode tube, support members and a chassis provided in the liquid crystal display device in FIG. 2. In FIG. 5, the long-side direction of the chassis corresponds to an X-axis direction and the short-side direction thereof corresponds to a Y-axis direction.

As illustrated in FIG. 1, the television receiver TV of the present embodiment includes the liquid crystal display device 10, front and rear cabinets Ca, Cb that house the liquid crystal display device 10 therebetween, a power source P, a tuner T and a stand S. An overall shape of the liquid crystal display device (display device) 10 is a landscape rectangular. The liquid crystal display device 10 is housed in a vertical position such that a short-side direction thereof matches a vertical line. As illustrated in FIG. 2, it includes a liquid crystal panel 11 as a display panel, and a backlight device 12 (lighting device), which is an external light source. They are integrally held by a frame-like bezel 13 and the like. In the present embodiment, the display device 10 has a display screen size of 32 inches and a ratio of a horizontal dimension to a vertical dimension of the display screen is 16:9. The display screen has a size of a horizontal dimension (a dimension in an X-axis direction) of approximately 698 mm and a vertical dimension (a dimension in a Y-axis direction) of approximately 392 mm.

Next, the liquid crystal panel 11 and the backlight device 12 included in the liquid crystal display device 10 will be explained (see FIGS. 2 to 4).

The liquid crystal panel (display panel) 11 is constructed such that a pair of glass substrates is bonded together with a predetermined gap therebetween and liquid crystal is sealed between the glass substrates. On one of the glass substrates, switching components (e.g., TFTs) connected to source lines and gate lines that are perpendicular to each other, pixel electrodes connected to the switching components, and an alignment film are provided. On the other substrate, a color filter having color sections such as R (red), G (green) and B (blue) color sections arranged in a predetermined pattern, counter electrodes, and an alignment film are provided. Polarizing plates 11a, 11b are attached to outer surfaces of the substrates (see FIGS. 3 and 4).

As illustrated in FIG. 2, the backlight device 12 includes a chassis 14, an optical sheet set 15 (a diffuser (light diffuser member) 30 and a plurality of optical sheets 31 that are disposed between the diffuser 30 and the liquid crystal panel 11), and frames 16. The chassis 14 has a substantially box-shape and an opening 14b on the light output side (on the liquid crystal panel 11 side). The frames 16 arranged along the long sides of the chassis 14 hold the long-side edges of the optical sheet 15 set to the chassis 14. The long-side edges of the optical sheet 15 set are sandwiched between the chassis 14 and the frames 16. A hot cathode tube 17 that is a light source (a linear light source), sockets 18 and lamp holders 19 are installed in the chassis 14. The sockets 18 are connected to ends of the hot cathode tube 17 for making electrical connection. The lamp holder 19 collectively covers each end of the hot cathode tube 17 and the socket 18. Support members 20 are provided in the chassis 14 and the support members 20 support the optical member 15 on a rear side (a hot cathode tube 17 side). A light exit side of the backlight device 12 is a side closer to the diffuser 30 than the hot cathode tube 17.

The chassis 14 is prepared by processing a metal plate. It is formed in a substantially shallow box shape. As illustrated in FIGS. 3 and 4, it includes a rectangular bottom plate 14a and outer rims 21, each of which extends upright from the corresponding side of the bottom plate 14a and has a substantially U shape. The outer rims 21 include short-side outer rims 21a and long-side outer rims 21b provided at the short sides and the long sides of the chassis 14, respectively. The bottom plate 14a of the chassis 14 has insertion holes at two end portions in the long-side direction thereof. The sockets 18 are mounted to the insertion holes. As illustrated in FIG. 3, fixing holes 14c are provided on the upper surface of the chassis 14 along the long-side outer rims 21b to bind the bezel 13, the frames 16 and the chassis 14 together with screws and the like.

A light reflection sheet 23 is disposed on an inner surface of the bottom plate 14a of the chassis 14 (on a side that faces the hot cathode tube 17). The light reflection sheet 23 is a synthetic resin sheet having a surface in white color that provides high light reflectivity. The light reflection sheet 23 is placed so as to cover almost entire inner surface of the bottom plate 14a of the chassis 14. As illustrated in FIG. 3, long-side edges of the light reflection sheet 23 are lifted so as to cover the long-side outer rims 21b of the chassis 14 and sandwiched between the chassis 14 and the optical member 15. The light reflection sheet 23 is provided to be sloped gently from the portion that extends along the bottom plate 14a of the chassis 14 to the portion sandwiched by the chassis 14 and the optical member 15. With this light reflection sheet 23, light emitted from the hot cathode tubes 17 is reflected to the optical member 15.

As illustrated in FIG. 4, the optical member 15 is formed in a rectangular shape with plan view like the liquid crystal panel 11 and the chassis 14. The optical member 15 is disposed between the liquid crystal panel 11 and the hot cathode tube 17. The optical member 15 includes a diffuser 30 that is provided on a rear side (on a hot cathode tube 17 side, a side opposite from the light exit side) and an optical sheet 31 that is provided on a front side (on a liquid crystal panel 11 side, a light exit side). The diffuser 30 is configured by a transparent plate-like member of synthetic resin having a certain thickness and light scattering particles dispersed therein. The diffuser 30 diffuses light transmitting therethrough and also reflects light emitted from the hot cathode tube 17. The optical sheet 31 is formed in a sheet-like shape having a thickness smaller than the diffuser 30. The optical sheet 31 is configured by layered three sheets. The optical sheet 31 includes a diffuser sheet, a lens sheet and a reflection-type polarizing plate layered in this order from the diffuser 30 side (the rear side).

As illustrated in FIGS. 3 and 4, the hot cathode tube 17 is formed in an elongated tubular (linear) shape. The hot cathode tube 17 includes a hollow glass tube 40, electrodes 17b each of which is provided at each end of the glass tube 17a. Mercury and noble gas is enclosed inside the glass tube 17a. Fluorescent material is coated on an inner wall surface of the glass tube 17a. Each electrode 17b includes a filament and terminals each of which is connected to each end of the filament. The socket 18 is fitted to each end of the hot cathode tube 17. The terminals are connected to an inverter board set 26 mounted on an outer surface side (rear surface side) of the bottom plate 14a of the chassis 14 via the sockets 18. Drive power is supplied from the inverter board set 26 to the hot cathode tube 17 and the inverter board set 26 controls a current value of the tube or brightness (a condition in which the light is on). The hot cathode tube 17 is provided between the diffuser 30 and the bottom plate 14a (the reflection sheet 23) of the chassis 14 and provided closer to the bottom plate 14a of the chassis 14 than the diffuser 30. An outer diameter of the hot cathode tube 17 is greater than that of the cold cathode tube (approximately 4 mm, for example) and is approximately 15.5 mm, for example.

The hot cathode tube 17 is arranged in the chassis 14 such that the longitudinal direction (the axial direction) matches the long-side direction of the chassis 14. The number of the hot cathode tube 17 is one. The hot cathode tube 17 is arranged in a middle portion of the chassis 14 in the short-side direction. The bottom plate 14a of the chassis 14 (the portion facing the optical member 15 and the hot cathode tube 17) is defined in three portions in the short-side direction of the chassis 14 (in the Y-axis direction). The three portions include a first end portion 14A, a second end portion 14B that is located on an opposite side end from the first end portion 14A and a middle portion 14C that is sandwiched between the first end portion 14A and the second end portion 14B. The hot cathode tube 17 is arranged in the middle portion 14C of the bottom plate 14 and a light source installation area LA is formed there. No hot cathode tube 17 is arranged in the first end portion 14A and the second end portion 14B of the bottom plate 14a and an empty area LN is formed there. The hot cathode tube 17 is partially arranged in the middle portion 14C of the bottom plate 14a of the chassis 14 to form the light source installation area LA. An area of the light source installation area LA (a length in the Y-axis direction) is smaller than that of the empty area LN (a length in the Y-axis direction). A ratio of an area of the light source installation area LA (a length in the Y-axis direction) to an area of an entire display screen (a vertical dimension of the display screen (a short-side dimension)) is approximately 4 %, for example. Each of the empty areas LN has substantially a same area. The hot cathode tube 17 is formed such that its length is substantially equal to a horizontal dimension (the long-side length) of the display screen.

The holders 19 that cover the ends of the hot cathode tube 17 and the sockets 18 are made of white synthetic resin. Each of them has an elongated substantially box shape that extends along the short side of the chassis 14 as illustrated in FIG. 2. As illustrated in FIG. 4, each holder 19 has steps on the front side such that the optical member 15 and the liquid crystal panel 11 are held at different levels. A part of the holder 19 is placed on top of a part of the corresponding short-side outer rim 21a of the chassis 14 and forms a side wall of the backlight device 12 together with the outer rim 21a. An insertion pin 24 projects from a surface of the holder 20 that faces the outer rim 21a of the chassis 14. The holder 20 is mounted to the chassis 14 by inserting the insertion pin 24 into the insertion hole 25 provided in the top surface of the outer rim 21a of the chassis 14.

The support members 20 are made of synthetic resin (such as polycarbonate) and an entire surface thereof is white having good light reflectivity. The support members 20 support the optical member 15 on a rear side that is the hot cathode tube 17 side. This keeps a constant positional relation (a distance, a gap) of the optical member 15 (especially the diffuser 30) and the hot cathode tube 17 in the Z-axis direction (a direction perpendicular to a plate surface of the optical member 15). Accordingly, the optical member 15 stably provides a desired optical function.

As illustrated in FIGS. 2 to 4, the support member 20 includes a main body 20a, a support portion 20b and a stopper portion 20c. The main body 20a extends along the bottom plate 14a of the chassis 14. The support portion 20b projects toward the front side (the optical member 15 side) from the main body 20a. The stopper portion 20c projects toward the rear side (the bottom plate 14a of the chassis 14) from the main body 20a. The main body 20a is formed in substantially a plate-like shape that extends along the bottom plate 14a of the chassis 14 and formed in a rectangular shape with plan view. The main body 20a is formed such that a plate surface area is greater than an area of a basal end of the support portion 20b with plan view. The stopper portion 20c includes two elastic stopper portions. Each of the elastic stopper portions is inserted through a mounting hole 14d formed in the chassis 14 and elastically comes in contact with an edge of the mounting hole 14d on the rear side. Accordingly, the support portion 20 is kept in a mounted state to the chassis 14.

The support portion 20b is formed in a conical shape. A cross-sectional shape taken along a plate surface of the main body 20a is a circle and a diameter of the support portion 20b decreases gradually from the basal end toward a distal end. A projection dimension of the support portion 20b is substantially equal to a distance from a front-side surface of the main body 20a to a rear-side surface of the diffuser 30 that is substantially flat along the X-axis direction and the Y-axis direction. Therefore, the support portion 20b is contacted with the diffuser 30 that is in substantially a flat state. The distal end of the support portion 20b that comes in contact with the diffuser 30 is round. The support portion 20b is contacted to a surface area of the optical member 15 with a point.

As illustrated in FIG. 5, a pair of the support members 20 is provided in predetermined positions in the chassis 14. The support members 20 are arranged in the chassis 14 so as to sandwich the hot cathode tube 17. Each of the support members 20 is arranged to be away with substantially an equal distance from the hot cathode tube 17 in the Y-axis direction and to be away with substantially an equal distance from a middle portion of the chassis 14 in the X-axis direction. Namely, the support members 20 are located to be symmetrical with respect to a central point of the chassis 14 and they are arranged to be in a line that is slanted with respect to the X-axis direction and the Y-axis direction (each side of the optical member 15). The support members 20 are arranged in adjacent to the middle portion of the chassis 14 in the long-side direction. Therefore, the support members 20 can support the middle portion area of the optical member 15 in the long-side direction. Therefore, the support members 20 can support the middle portion area of the optical member 15 in the long-side direction. The support members 20 are arranged to effectively support the middle portion of the optical member 15 in which deformation such as deflection or warping is likely to occur due to thermal expansion and thermal contraction.

Next, a light reflecting function of the diffuser 30 will be explained in detail.

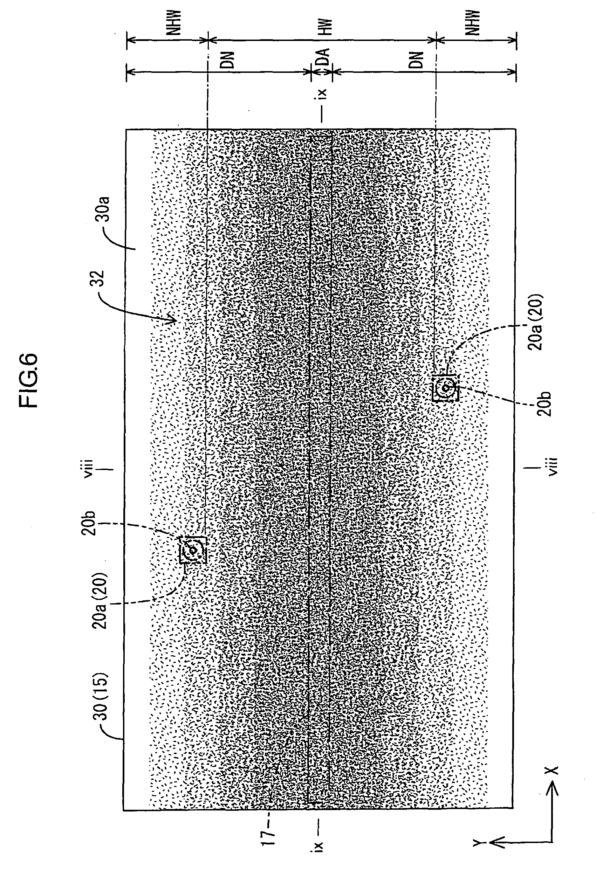

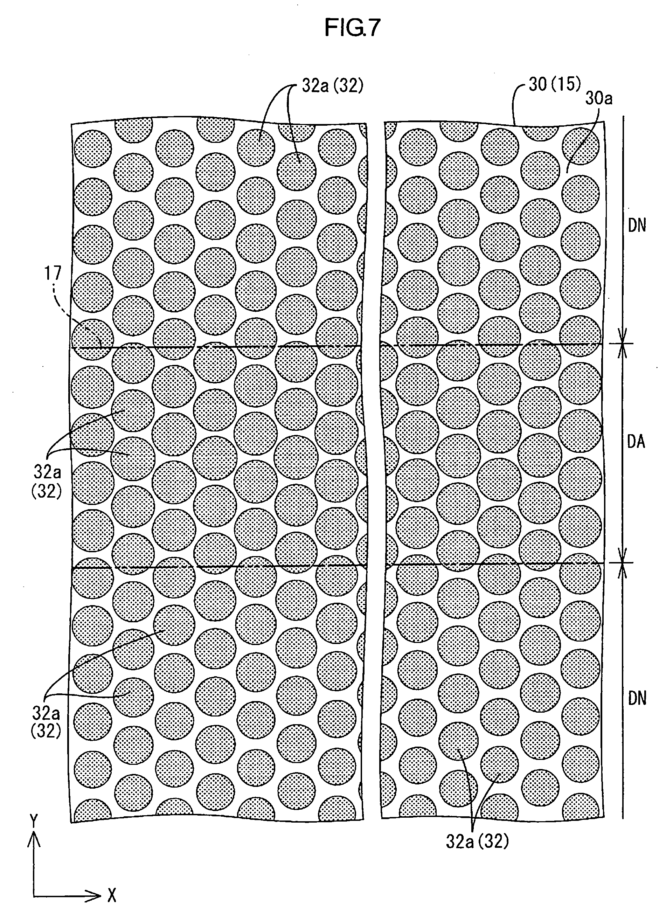

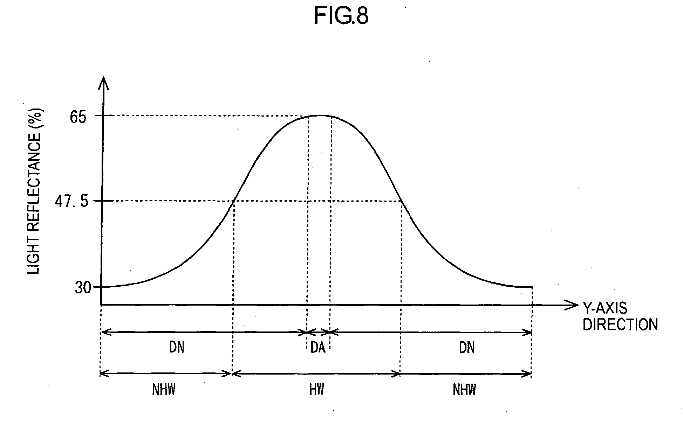

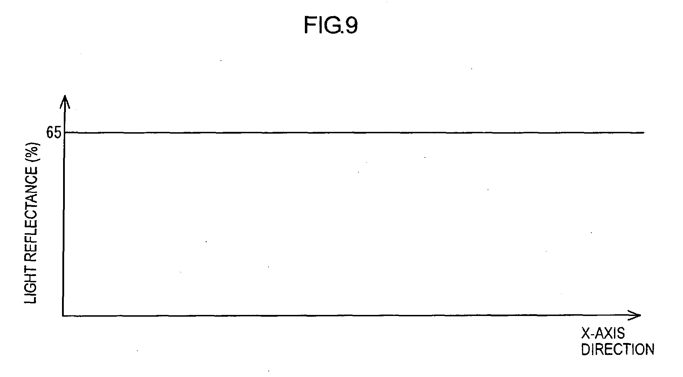

FIG. 6 is a plan view explaining a light reflectance distribution of the diffuser. FIG. 7 is an enlarged plan view illustrating a general construction of a surface of the diffuser that faces the hot cathode tube. FIG. 8 is a graph illustrating a light reflectance change in a short-side direction of the diffuser in FIG. 6. FIG. 9 is a graph illustrating a light reflectance change in a long-side direction of the diffuser in FIG. 6. In FIGS. 8 and 9, the long-side direction of the diffuser is referred to as an X-axis direction and the short-side direction thereof is referred to as a Y-axis direction. In FIG. 8, a horizontal axis shows the Y-axis direction (short-side direction) and the light reflectance is plotted on a graph from a front end portion to a rear end portion along the Y-axis direction in FIG. 6. In FIG. 9, a horizontal axis shows the X-axis direction (long-side direction) and the light reflectance is plotted on a graph from a left end portion to a right end portion along the Y-axis direction in FIG. 6.

The diffuser 30 is configured by a plate-like member of substantially transparent synthetic resin (such as polystyrene) and a predetermined amount of light scattering particles that scatters light dispersed therein. Light transmission and light reflectance are substantially uniform in an entire area of the diffuser 30. Preferable light transmission of the base substrate of the diffuser 30 (not including a light reflecting portion 32 that will be described later) is approximately 70 % and preferable light reflectance thereof is approximately 30%. The diffuser 30 includes a surface that faces the hot cathode tube 17 (referred to as a first surface 30a) and a surface that faces the liquid crystal panel 11 and positioned on an opposite side from the first surface 30a (referred to as a second surface 30b). The first surface 30a is a light entrance surface which the light emitted from the hot cathode tube 17 enters and the second surface 30b is a light exit surface through which the light (illumination light) exits toward the liquid crystal panel 11.

As illustrated in FIGS. 6 and 7, a light reflecting portion 32 configured by a white dot pattern is formed on the first surface 30a of the diffuser 30 that is the light entrance surface. The light reflecting portion 32 is configured by arranging a plurality of dots 32a in a zigzag arrangement (offset arrangement). Each dot 32a is formed in a circular shape with plan view. The dot pattern forming the light reflecting portion 32 is formed by printing paste containing metal oxide, for example, on the surface of the diffuser 30. Preferable printing means is screen printing, inkjet printing and the like. The light reflecting portion 32 has a light reflectance of approximately 75% in its surface area and the diffuser 30 has light reflectance of approximately 30% in its surface area. Thus, the light reflecting portion 32 has a relatively high light reflectance. In the present embodiment, the light reflectance of each material is represented by an average light reflectance measured with a LAV of CM-3700d (measurement area diameter of 25.4 mm) manufactured by Konica Minolta inside the measurement circle. The light reflectance of the light reflecting portion 32 is measured in the following method. The light reflecting portion 32 is formed over an entire surface of a glass substrate and the light reflectance of the surface is measured according to the above measurement means.

The long-side direction of the diffuser 30 corresponds to the X-axis direction and the short-side direction thereof corresponds to the Y-axis direction. The light reflectance of the first surface 30a of the diffuser 30 that faces the hot cathode tube 17 changes in the short-side direction as illustrated in FIG. 8 by changing the dot pattern of the light reflecting portion 32 (refer to FIGS. 3 and 6). As illustrated in FIG. 6, on the first surface 30a of the diffuser 30, the light reflectance of the portion that overlaps the hot cathode tube 17 (refereed to as a light source overlapping portion DA) is higher than the light reflectance of the portion that does not overlaps the hot cathode tube 17 (referred to as an empty area overlapping portion DN). As illustrated in FIG. 9, the light reflectance of the first surface 30a of the diffuser 30 des not change in the long-side direction and is substantially uniform (refer to FIGS. 4 and 6).

The light reflectance distribution of the diffuser 30 will be explained in detail. As illustrated in FIGS. 6 to 8, the light reflectance of the diffuser 30 decreases in a continuous manner in the short-side direction (the Y-axis direction) as is farther away from the hot cathode tube 17 and increases in a continuous manner as is closer to the hot cathode tube 17. The light reflectance distribution is a normal distribution (a bell-shaped curve). Specifically, the light reflectance of the diffuser 30 is highest in the middle portion of the diffuser 30 in the short-side direction (corresponding to the middle portion of the hot cathode tube 17) and lowest in the two end portions in the short-side direction. The highest value of the light reflectance is approximately 65 % and the lowest value thereof is approximately 30 % that is equal to the light reflectance of the diffuser 30. In the two end portions of the diffuser 30 in the short-side direction, the light reflecting portion 32 is arranged in a small area or may not be arranged. An area of the diffuser plate 30 that has a light reflectance higher than the light reflectance value obtained by adding the lowest value to a half value of the light reflectance value obtained by subtracting the lowest value from the highest value (for example, 47.5 %) corresponds to a half-value width area HW. A width dimension of the half-value width area HW corresponds to a half-value width. If the maximum light reflectance is represented by Rmax and the minimum light reflectance is represented by Rmin, the area of the diffuser 30 having the light reflectance Ra that satisfies the following formula (2) is a half-value width area HW.

$$[\text{formula (2)}]$$

$$(Rmax - Rmin) / 2 + Rmin < Ra$$

An area of the diffuser 30 that has a light reflectance equal to or lower than the light reflectance value obtained by adding the lowest value to a half value of the light reflectance value obtained by subtracting the lowest value from the highest value (for example, 47.5 %) corresponds to a non half-value width area NHW. An area of the diffuser 30 excluding the half-value width area HW is the non half-value width area NHW. If the maximum light reflectance is represented by Rmax and the minimum light reflectance is represented by Rmin, an area of the diffuser 30 having light reflectance Rb that satisfies the following formula (3) is the non half-value width area NHW. A pair of non half-value width areas NHW is provided on the diffuser 30 so as to sandwich the half-value width area HW therebetween.

$$[\text{formula (3)}]$$

$$(Rmax - Rmin) / 2 + Rmin > Rb$$

In the present embodiment, a ratio of the half-value width to the short-side length of the diffuser 30 is approximately 60 %. Namely, a middle area of approximately 60 % of an entire area of the diffuser 30 in the short-side direction corresponds to the half-value width area HW and each end portion area of approximately 20 % of the entire area of the diffuser 30 in the short-side direction corresponds to the non half-value width area NHW. The half-value width area HW includes an entire area of the light source installation area LA (the light source overlapping portion DA) and a predetermined area of each empty area LN (each empty area overlapping portion DN) that is close to the light source installation area LA. Specifically, the half-value width area HW includes a half or larger area of each empty area LN and the ratio of the area of the empty area LN included in the half-value width area HW to the short-side length of the diffuser 30 is approximately 28 %. On the other hand, the non half-value width area NHW includes a predetermined area of each empty area LN that is close to an end of the diffuser 30 (an area opposite from the light source installation area LA). Specifically, the non half-value width area NHW includes a half or smaller area of each empty area LN and the ratio of the area of the empty area included in the half-value width area NHW to the short-side length of the diffuser 30 is approximately 20 % as described before.

The light reflecting portion 32 is formed as described below to provide the above-described light reflectance distribution. An area of each dot 32a of the light reflecting portion 32 is greatest in the middle portion of the diffuser 30 in the short-side direction that corresponds to the middle portion of the hot cathode tube 17. An area of each dot 32a decreases as is farther from the middle portion and is lowest in the portion that is closest to the end of the diffuser 30 in the short-side direction. Namely, an area of each dot 32a decreases as is farther away from the middle portion of the hot cathode tube 17. With the above-structured diffuser 30, the brightness distribution of illumination light is moderate on the diffuser 30 and this eventually achieves a moderate illumination brightness distribution in the backlight device 12. As control means for controlling the light reflectance, the area of each dot 32a of the light reflecting portion 32 may be set to be same and a distance between the dots 32a may be changed.

In the present embodiment, the support members 20 for supporting the optical member 15 are arranged in the chassis 14. In such a configuration, the support portion 20b of the support member 20 extends from the bottom plate 14a (the reflection sheet 23) to the optical member 15 through the space in the chassis 14. This configuration may cause following problems. Rays of light emitted from the hot cathode tube 17 that is a light source may be blocked by the support portion 20b that extends through the space in the chassis 14. This may reduce the amount of transmitted light in a specific portion of the optical member 15 that corresponds to the support portion 20b, and this may generate partial dark portions.

In the present embodiment, the support members 20 are arranged in the chassis 14 in the Y-axis direction (a direction in which the light reflectance changes on the diffuser 30) as described below to suppress occurrence of uneven brightness. As illustrated in FIGS. 5 and 6, each support member 20 is arranged in the empty area LN (the first end portion 14A and the second end portion 14B) of the chassis 14 so as to be away with a predetermined distance from the hot cathode tube 17 in the Y-axis direction. Each support member 20 is provided close to the end in the short-side direction of the chassis 14 and specifically, each support member 20 is provided in an area of approximately 20 % of an entire area of the chassis 14 close to the end in the short-side direction. Namely, each support member 20 is provided in a portion of the diffuser 30 that overlaps the non half-value width area NHW within the chassis 14.

The support member 20 is provided such that an end of the main body 20a close to the hot cathode tube 17 is positioned on substantially a border between the half-value width area HW and the non half-value width area NHW. Therefore, the support member 20 is provided such that an entire surface area of the support member 20 overlaps the non half-value width area NHW and the support member 20 does not intrude in the half-value width area HW. In other words, the support member 20 is provided within the chassis 14 so as to overlap the non half-value width area NHW and so as to be close to the half-value width area HW (closest to the half-value width area HW). The support member 20 is provided in a portion of the chassis 14 that overlaps the non half-value width area NHW and is closest to the middle portion in the short-side direction of the diffuser 30. Deformation such as deflection or warping is most likely to occur in the middle portion of the diffuser 30 due to thermal expansion and thermal contraction. Therefore, the support member 20 that is provided closest to the middle portion of the diffuser 30 in the short-side direction supports the diffuser 30 effectively. The support portion 20b of the support member 20 is provided in a portion of the chassis 14 that overlaps the non half-value width area NHW and that is away with a predetermined distance from the border between the half-value width area HW and the non half-value width area NHW toward the end side (an opposite side from the hot cold cathode tube 17). A distance from a center of each support member 20 (each support portion 20b) to a center of the hot cathode tube 17 corresponds to a length of approximately 30 % of the short-side length of the chassis 14. A distance from a center of each support member 20 to an end of the chassis 14 in the short-side direction corresponds to a length of approximately 20 % of the short-side length of the chassis 14.

The construction of the present embodiment is described above and an operation thereof will be explained. When the liquid crystal display device 10 is used, the hot cathode tube 17 is lit and rays of light emitted from the hot cathode tube 17 enter directly the first surface 30a of the diffuser 30 or reflect off the reflection sheet 23, the holders 19 and the support members 20 and enter indirectly the first surface 30a. After transmitting through the diffuser 30, the rays of light are exited through the optical sheet 31 toward the liquid crystal panel 11. The light reflecting function of the diffuser 30 will be explained in detail.

As illustrated in FIGS. 3 and 6, the light reflecting portion 32 is formed on the first surface 30a of the diffuser 30 which the light emitted from the hot cathode tube 17 enters. The light reflecting portion 32 has different light reflectance in every area in a surface plane of the first surface 30a. Accordingly, light entrance efficiency is effectively controlled in every area. A great amount of rays of light enter the light source overlapping portion DA that overlaps the hot cathode tube 17 on the first surface 30a directly from the hot cathode tube 17 and the amount of rays of light is relatively greater than that in the empty area overlapping portion DN. The light reflectance of the light reflecting portion 32 in the light source overlapping portion DA is relatively increased (refer to FIGS. 6 and 8). This suppresses (restricts) entrance of rays of light into the first surface 30a and a greater amount of rays of light are reflected and returned to the chassis 14. On the other hand, a small amount of rays of light enter the empty area overlapping portion DN that does not overlap the hot cathode tube 17 on the first surface 30a directly from the hot cathode tube 17 and the amount of rays of light is relatively smaller than that in the light source overlapping portion DA. The light reflectance of the light reflecting portion 32 on the empty area overlapping portion DN is relatively decreased (refer to FIGS. 6 and 8) to accelerate the entrance of light into the first surface 30a. In such a case, the light reflected by the light reflecting portion 32 on the light source overlapping portion DA into the chassis 14 is guided to the empty area overlapping portion DN by the reflection sheet 23. This compensates the amount of rays of light in the empty area overlapping portion DN and this ensures the sufficient amount of rays of light entering the empty area overlapping portion DN.

As described before, the light reflecting portion 32 controls light reflectance of the first surface 30a of the diffuser 30. This mostly achieves uniform amount of rays of light directing toward the diffuser 30 within the chassis 14. However, it is difficult to achieve a completely uniform amount of rays of light. It is likely to happen that the light source installation area LA having a greater amount of light directly from the hot cathode tube 17 has the greater amount of light directing toward the diffuser 30 than the empty area LN having a smaller amount of light directly from the hot cathode tube 17. Therefore, the amount of rays of light directing toward the diffuser 30 within the chassis 14 is relatively smaller in the portion of the diffuser 30 that overlaps the non half-value width area HNW than the portion (the position) of the diffuser 30 that overlaps the half-value width area HW.

The support member 20 supporting the diffuser 30 provided in the chassis 14 may block some of the light directing toward the diffuser 30 within the chassis 14. Therefore, the amount of transmitted light may be smaller in a specific portion of the diffuser 30 than its adjacent portions.

In the present embodiment, the support member 20 is provided in the portion of the diffuser 30 that overlaps the non half-value width area NHW having a small amount of light. Even if some of the light directing toward the diffuser 30 may be blocked by the support member 20, the amount of light is small in the portion adjacent to the support member 20 and therefore the difference in the amount of rays of light transmitting through the portion in which light is blocked by the support member 20 and the portion in which light is not blocked by the support member 20 is less likely to be caused. The support member 20 is provided in the empty area LN that has a small amount of rays of light in the chassis 14, and this is effective to achieve a uniform amount of transmitted light of the diffuser 30. The support member 20 is provided in the portion of the diffuser 30 that overlaps the non-half width area NHW and is close to the half-value width area HW, that is, the portion that is closest to the middle portion in the short-side direction of the diffuser 30. Even if deformation such as deflection or warping occurs due to thermal expansion and thermal contraction of the diffuser 30 caused by change in thermal environment, the diffuser 30 is effectively supported. Accordingly, unevenness is less likely to be caused in the brightness distribution of illumination light exited from the diffuser 30 and the optical sheet 31.

As explained before, the backlight device 12 of the present embodiment includes the hot cathode tube 17 that is a light source, the chassis 14, the diffuser 30 that is the optical member 15, and the support members 20. The chassis 14 houses the hot cathode tube 17 therein and has the opening 14b through which the light from the hot cathode tube 17 exits. The diffuser 30 is provided to cover the opening 14b and face the hot cathode tube 17. The support members 20 support the diffuser 30 on the hot cathode tube 17 side. A surface of the chassis 14 that faces the diffuser 30 is defined in the light source installation area LA in which the hot cathode tube 17 is arranged and the empty area LN in which no hot cathode tube 17 is arranged. The diffuser 30 includes the first surface 30a that faces the hot cathode tube 17. The light reflectance of at least the first surface 30a of the portion that overlaps the light source installation area LA (the light source overlapping portion DA) is higher than the light reflectance of the first surface 30a of the portion that overlaps the empty area LN (the empty area overlapping portion DN). If the maximum light reflectance is represented by Rmax and the minimum light reflectance is represented by Rmin on at least the first surface 30a of the diffuser 30 that faces the hot cathode tube 17, the support member 20 is provided in the portion that overlaps the portion of the diffuser 30 that has light reflectance R satisfying the following formula (1) (the non half-value width area NHW).

$$[\text{formula (1)}]$$

$$(Rmax - Rmin) / 2 + Rmin > R$$

With such a configuration, the light emitted from the hot cathode tube 17 first reaches the portion of the diffuser 30 that has relatively high light reflectance (the light source overlapping portion DA) and most of the light is reflected by (does not transmit through) the light source overlapping portion DA. This suppresses brightness of illumination light with respect to the amount of light emitted from the hot cathode tube 17. On the other hand, the light that reflects off the light source overlapping portion DA is further reflected in the chassis 14 and the light reaches the empty area LN. The light reflectance of the portion of the diffuser 30 that overlaps the empty area LN (the empty area overlapping portion DN) is relatively low and a larger amount of light passes through the portion and thus predetermined brightness of illumination light is achieved.

The light reflectance of the diffuser 30 is set as described above and this mostly achieves uniform amount of rays of light directing toward the diffuser 30 within the chassis 14. However, it is difficult to achieve a completely uniform amount of rays of light. It is likely to happen that the light source installation area LA has the amount of rays of light directing toward the diffuser 30 within the chassis 14 greater than the empty area LN. Therefore, the amount of rays of light directing toward the diffuser 30 within the chassis 14 is relatively smaller in the portion of the diffuser 30 that overlaps the portion having the light reflectance R satisfying the above formula (1) (the non half-value width area NHW) than the portion of the diffuser 30 that overlaps the portion having the light reflectance that does not satisfy the above formula (1) (the half-value width area HW). In the present embodiment, the support members 20 are provided in the portions of the diffuser 30 that overlap the portion having the light reflectance R satisfying the above formula (1) (the non half-value width area NHW). Even if some of the light directing toward the diffuser 30 within the chassis 14 is blocked by the support member 20, the difference in the amount of rays of light transmitting through the portion in which light is blocked by the support member 20 and the portion in which light is not blocked by the support member 20 is less likely to be caused. Accordingly, unevenness is less likely to be caused in the brightness distribution of illumination light exited from the diffuser 30.

According to the present embodiment, the arrangement of the support members 20 is altered to achieve a uniform brightness distribution of illumination light. Compared to the case in which a configuration of the optical member (for example, a distribution of the light reflecting portion) is altered, a cost can be reduced.

The portion of the chassis 14 facing the diffuser 30 is defined in a first end portion 14A, a second end portion 14B that is located at an end opposite from the first end portion 14A and a middle portion 32C that is sandwiched between the first end portion 14A and the second end portion 14B. The middle portion 14C is the light source installation area LA and the first end portion 14A and the second end portion B are empty areas LN. With such a configuration, sufficient brightness is ensured in the middle portion of the backlight device 12 and brightness is also ensured in the middle portion of the display of the liquid crystal display device 10 including the backlight device 12. Good visibility can be obtained.

The light reflectance of at least the first surface 30a of the diffuser 30 that faces the hot cathode tube 17 decreases as is farther away from the hot cathode tube 17. With this configuration, a moderate brightness distribution of illumination light exited from the diffuser 30 is achieved in the portion overlapping the light source installation area LA (the light source overlapping portion DA) and the portions overlapping the empty areas LN (the empty area overlapping portions DN).

The support member 20 is provided in the empty area LN. The amount of light within the chassis 14 is relatively smaller in the empty area LN than the light source installation area LA. Therefore, the support member 20 provided in the empty area LN is less likely to cause the difference in the amount of rays of light transmitting through the portion in which light is blocked by the support member 20 and the portion in which light is not blocked by the support member 20. Accordingly, unevenness is less likely to be caused in the brightness distribution of illumination light exited from the diffuser 30.

The light reflecting portion 32 for reflecting light is formed on the first surface 30a of the diffuser 30 that faces the hot cathode tube 17. With this configuration, the light reflectance of the first surface 30a of the diffuser 30 on the hot cathode tube 17 side is appropriately controlled by the formation pattern of the light reflecting portion 32.

The light reflecting portion 32 is configured by a plurality of dots 32a having light reflectivity and formed in substantially a point-like shape in a surface area of the diffuser 30 on the hot cathode tube 17 side. The light reflectance is easily controlled by a pattern form (an area of each dot or a density distribution) of the dots 32a.

The diffuser 30 is formed in a rectangular shape with plan view. At least a pair of support members 20 is arranged in the chassis 14 so as to be aligned along a slanted line with respect to each side of the diffuser 30. With this configuration, compared to an arrangement in which the support members are linearly aligned along a line parallel to one of the sides of the diffuser 30, the support members 20 are less likely to be recognized.

The support member 20 includes the main body 20a and the support portion 20b. The main body 20a extends along the chassis 14. The support portion 20b projects from the main body 20a toward the diffuser 30 side and comes in contact with a surface of the diffuser 30 that faces the hot cathode tube 17. With this configuration, the main body 20a extending along the chassis 14 stabilizes the mounting condition of the support members 20 with respect to the chassis 14. The support portion 20b projecting from the main body 20a toward the diffuser 30 side effectively supports the diffuser 30.

At least the support portion 20b of the support member 20 is provided to overlap the portion of the diffuser 30 having the light reflectance R that satisfies the above formula (1) (non half-value width area NHW). The light directing toward the diffuser 30 within the chassis 14 is easily blocked by the support portion 20b of the support member 20 that can be contacted directly to the diffuser 30. However, the support portion 20b is provided to overlap the portion of the diffuser 30 having the light reflectance R that satisfies the above formula (1) (the non half-value width area NHW). This reduces the amount of light that is blocked by the support portion 20b and achieves the uniform amount of transmitted light more effectively.

The support portion 20b is formed in a point-like shape in a surface area of the diffuser 30. Accordingly, compared to a case in which the support portion is formed in a line or a plane in a surface area of the diffuser, the light emitted from the hot cathode tube 17 and directed to the diffuser 30 is less likely to be blocked by the support portion 20b and this preferably suppress occurrence of uneven brightness.

The support portion 20b is formed to be tapered. With this configuration, the light emitted from the hot cathode tube 17 and directed to the diffuser 30 is less likely to be blocked by the support portion 20b and this preferably suppress occurrence of uneven brightness.

The chassis 14 is formed in a rectangular shape with plan view. The hot cathode tube 17 is provided to extend along the long-side direction of the chassis 14. The light installation area LA and the empty areas LN are arranged along the short-side direction of the chassis 14. Accordingly, the linear hot cathode tube 17 is effectively used as the light source.

The support member 20 has a surface that provides white. With this configuration, light effectively reflects off the surface of the support member 20 and light emitted from the hot cathode tube 17 can be effectively used.

The light source is the hot cathode tube 17. Accordingly, improved brightness is achieved.

The present invention is not limited to the first embodiment, and may include a following modification. In the following modification, the same components and parts as the first embodiment are indicated by the same symbols and will not be explained.

[First Modification of First Embodiment]

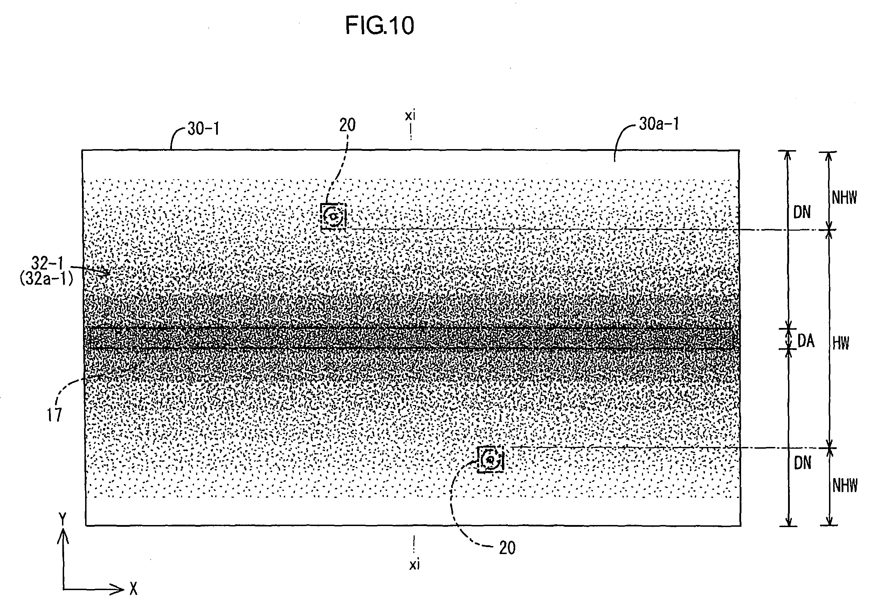

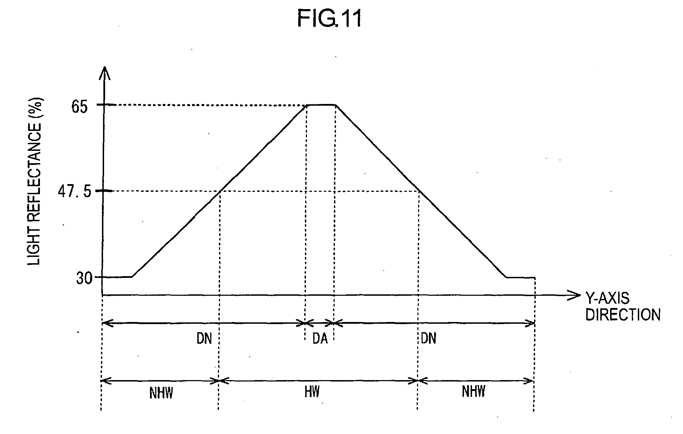

A first modification of the first embodiment will be explained with reference to FIGS. 10 and 11. In this modification, the distribution of light reflectance of a first surface 30a-1 of a diffuser 30-1 is altered. FIG. 10 is a plan view illustrating a distribution of light reflectance of a diffuser of this modification. FIG. 11 is a graph illustrating a light reflectance change in a short-side direction of the diffuser of FIG. 10.

As illustrated in FIGS. 10 and 11, the light reflectance is substantially uniform to be 65 %, for example, in the light source overlapping portion DA on the first surface 30a-1 of the diffuser 30-1. The light reflectance in the light source overlapping portion DA is highest in an entire area of the diffuser 30-1. On the other hand, the light reflectance decreases in a continuous and gradual manner (so as to form a slope) in the empty area overlapping portion DN from the portion closer to the light source overlapping portion DA toward the portion away therefrom. The light reflectance is 30% that is smallest in the end portions in the short-side direction (the Y-axis direction) of the diffuser 30-1. An area of each dot 32a-1 of a light reflecting portion 32-1 is maximum and uniform in the light source overlapping portion DA. In the empty area overlapping portion DN, an area of each dot 32a-1 decreases in a continuous and gradual manner as is farther away from the light source overlapping portion DA. This configuration achieves a moderate brightness distribution of illumination light exited from the diffuser 30-1. The arrangement of the half-value width area HW and the non half-value width area NHW in the diffuser 30-1 and the arrangement of the support members 20 are similar to the first embodiment and explanation thereof will be omitted.

[Second Modification of First Embodiment]

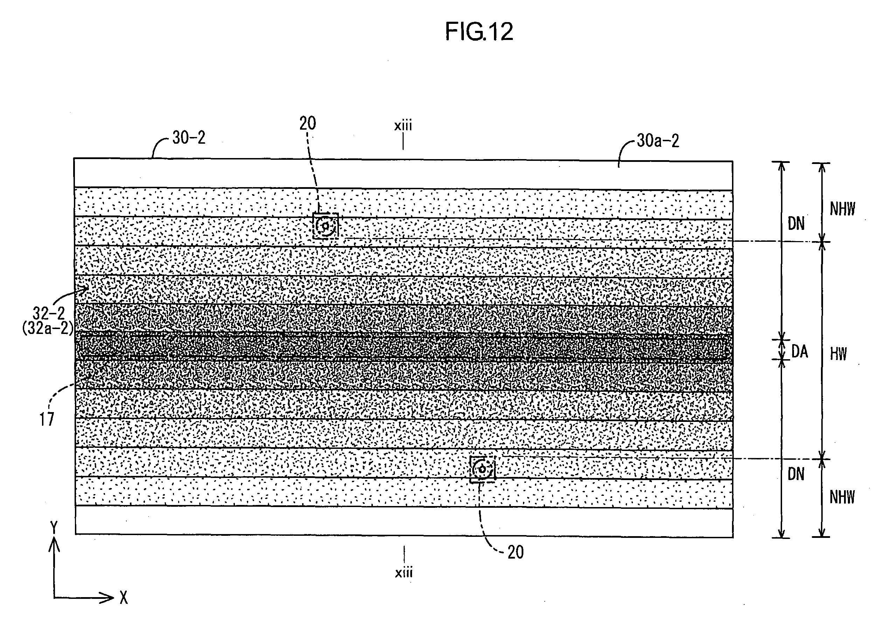

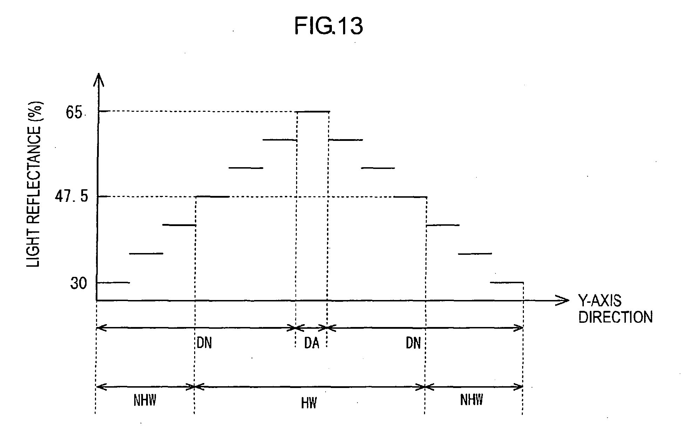

A second modification of the first embodiment will be explained with reference to FIGS. 12 and 13. A light reflectance distribution on a first surface 30a-2 of a diffuser 30-2 is further altered. FIG. 12 is a plan view illustrating a light reflectance distribution of the diffuser according to the second modification. FIG. 13 is a graph illustrating light reflectance change of the diffuser of FIG. 12 in the short-side direction.

As illustrated in FIGS. 12 and 13, a light reflecting portion 32-2 is formed such that the light reflectance of the first surface 30a-2 of the diffuser 30-2 in a surface area decreases in a stepwise and gradual manner from the light source overlapping portion DA to the empty area overlapping portion DN. An area (light reflectance) of each of the dots 32a-2 forming the light reflecting portion 32-2 is greatest (highest) and uniform in the light source overlapping portion DA. An area of each of the dots 32a-2 decreases in a stepwise and gradual manner as is farther away from the light source overlapping portion DA by every predetermined area and is smallest at the two ends of the diffuser 30-2 in the short-side direction (the Y-axis direction). Namely, the light reflectance changes in the short-side direction of the diffuser 30-2 (the Y-axis direction) so as to form a stripe pattern in the empty area overlapping portion DN of the light reflecting portion 32-2. With such a configuration, the brightness distribution of illumination light exited from the diffuser 30-2 becomes moderate. By forming a plurality of areas in each of which the light reflectance changes in a stepwise manner, the diffuser 30-2 can be manufactured in a simple method and this contributes cost reduction.

The arrangement of the half-value width area HW and the non half-value width area NHW on the diffuser 30-2 and the arrangement of the support members 20 are similar to the first embodiment and will not be explained.

<Second Embodiment>

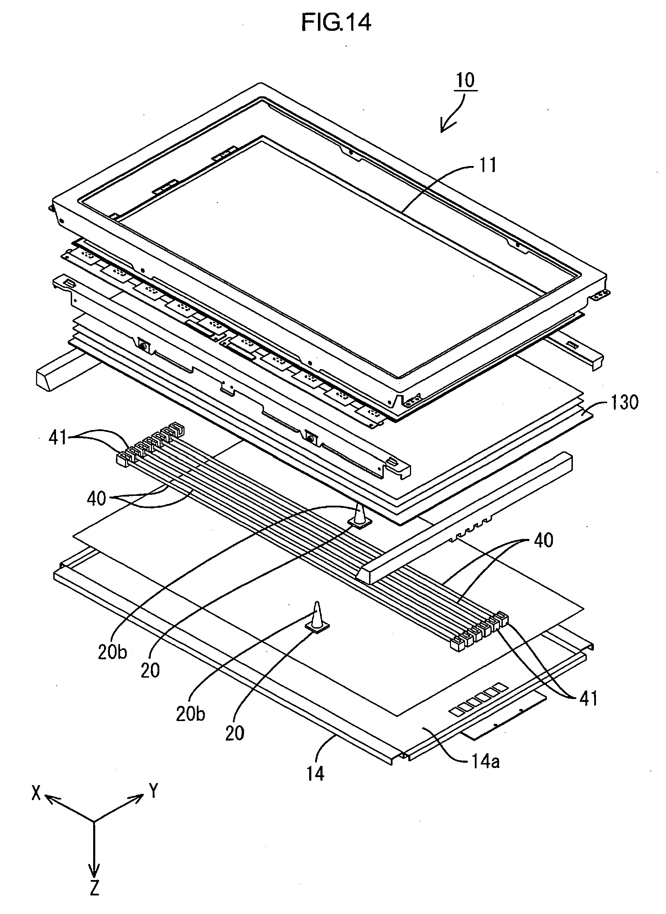

A second embodiment of the present invention will be explained with reference to FIGS. 14 to 19. In the second embodiment, cold cathode tubes 40 are used as the light source and other configurations are similar to the first embodiment. In the second embodiment, the same components and parts as the first embodiment are indicated by the same symbols and will not be explained.

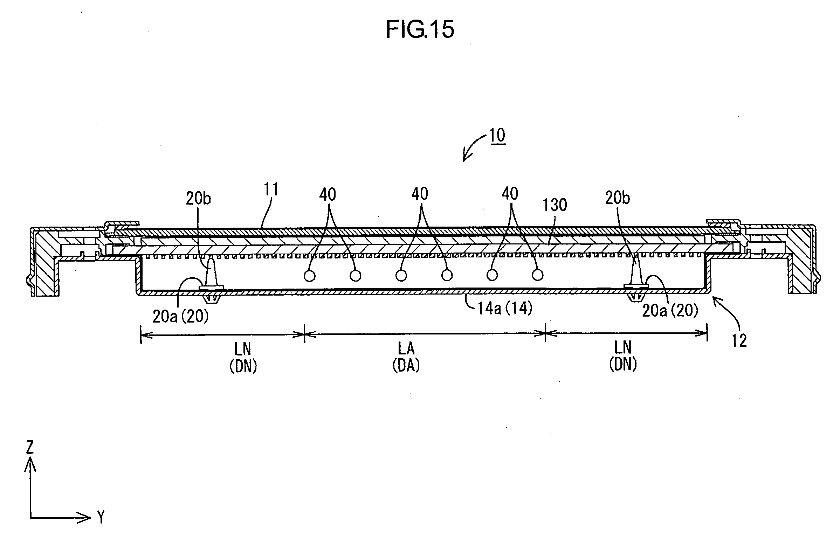

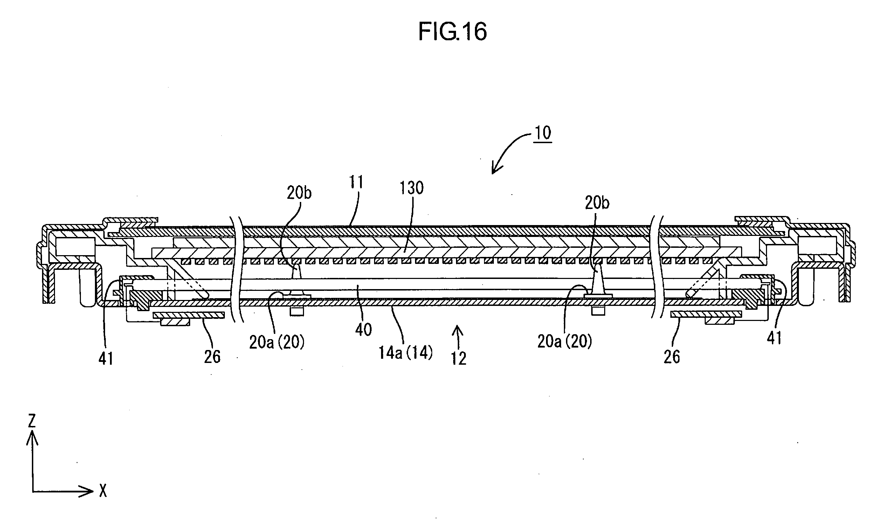

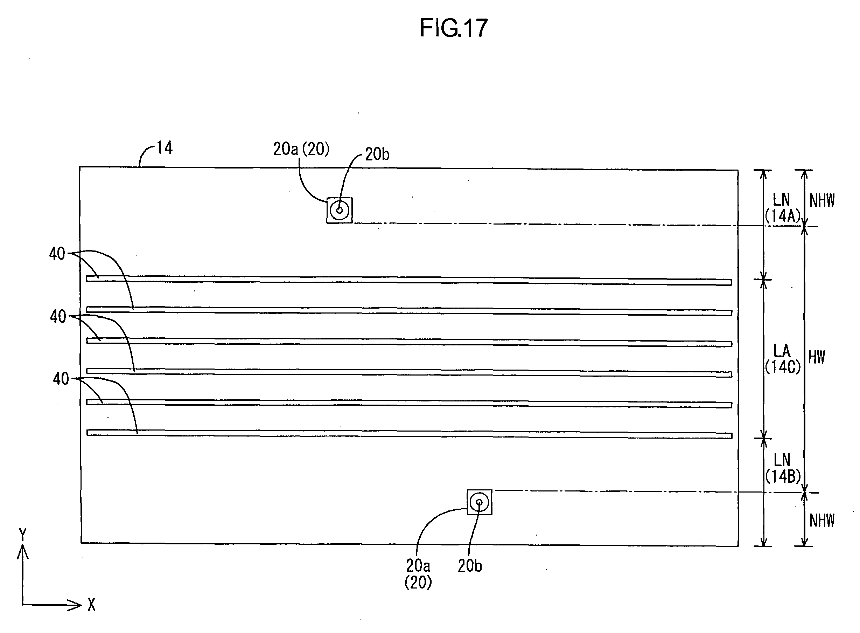

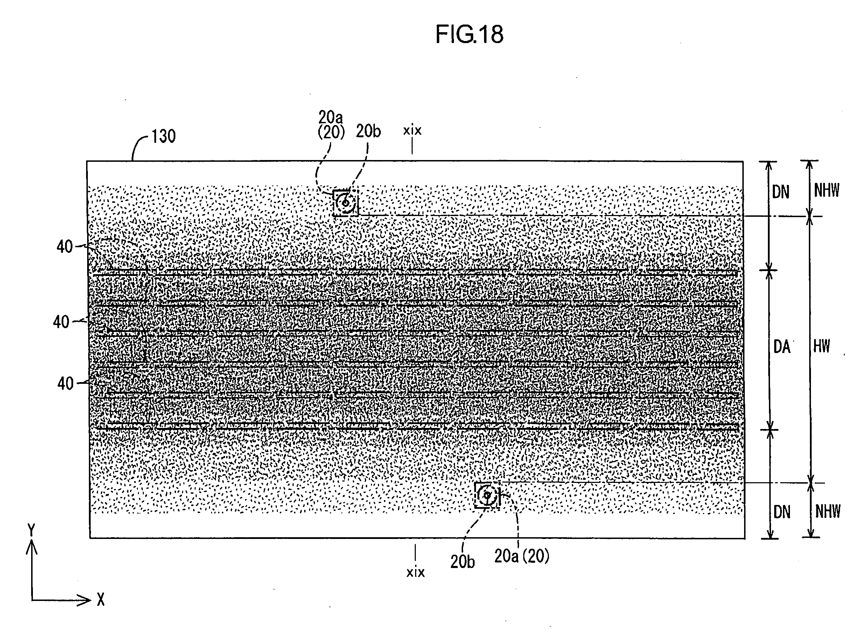

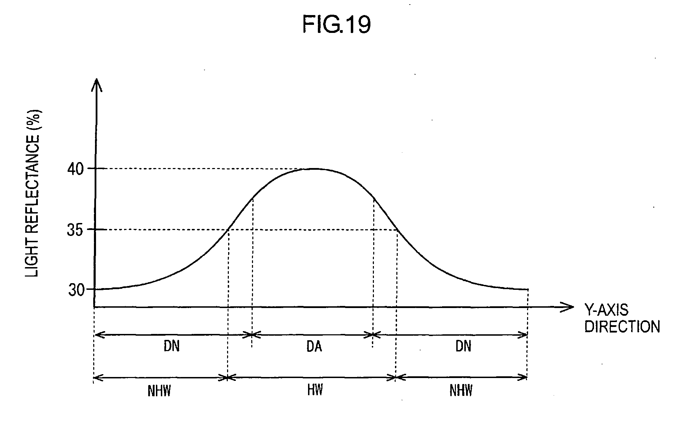

FIG. 14 is an exploded perspective view illustrating a general construction of a liquid crystal display device. FIG. 15 is a cross-sectional view of the liquid crystal display device along the short-side direction. FIG. 16 is a cross-sectional view of the liquid crystal display device of FIG. 14 along the long-side direction. FIG. 17 is a plan view illustrating a general construction of a chassis provided in the liquid crystal display device in FIG. 14. FIG. 18 is a plan view illustrating a light reflectance distribution of the diffuser included in the liquid crystal display device of FIG. 14. FIG. 19 is a graph illustrating a light reflectance change in a short-side direction of the diffuser of FIG. 18. In FIG. 19, a long-side direction of the diffuser corresponds to the X-axis direction and a short-side direction of the diffuser corresponds to the Y-axis direction. In FIG. 19, a horizontal axis shows the Y-axis direction (short-side direction) and light reflectance is plotted on a graph from a front end portion to a rear end portion along the Y-axis direction in FIG. 18.

As illustrated in FIGS. 14 to 16, a cold cathode tube 40 that is a light source in the present embodiment is formed in an elongated tubular (linear) shape. The cold cathode tube 40 includes a hollow glass tube two ends of which are sealed and two electrodes each of which is provided in each end of the glass tube. Mercury and noble gas is enclosed inside the glass tube. Fluorescent material is coated on an inner wall surface of the glass tube. A relay connector 41 is arranged at the two ends of the cold cathode tube 40 and the relay connector 41 is connected to a lead terminal that extends from the electrode to outside of the glass tube. The cold cathode tube 40 is connected to an inverter board set 26 mounted on an outer surface side of the bottom plate 14a of the chassis 14 via the relay connectors 41 and driving of the cold cathode tubes 40 is controlled. An outer diameter of the cold cathode tube 40 is smaller than that of the hot cathode tube 17 of the first embodiment (approximately 15.5 mm, for example) and is approximately 4 mm, for example.

Six cold cathode tubes 17 each having the above configuration are arranged in a portion of the chassis 14 to be parallel to each other with having a predetermined distance (arrangement pitch) therebetween such that their longitudinal direction (axial direction) matches the long-side direction of the chassis 14. More specifically, as illustrated in FIGS. 14 to 17, a bottom plate 14a of the chassis 14 (a portion facing a diffuser 130) is defined in the short-side direction equally in a first end portion 14A, a second end portion 14B that is located at an end opposite from the first end portion 14A and a middle portion 14C that is sandwiched between the first end portion 14A and the second end portion 14B. The cold cathode tubes 40 are arranged in the middle portion 14C of the bottom plate 14a and a light source installation area LA is formed in the middle portion 14C. In the present embodiment, the light source installation area LA is greater than that of the first embodiment. On the other hand, no cold cathode tube 40 is arranged in the first end portion 14A and the second end portion 14B of the bottom plate 14a and an empty area LN is formed in the first end portion 14A and the second end portion 14B. Namely, the cold cathode tubes 40 are partially arranged in the middle portion of the bottom plate 14a of the chassis 14 in the short-side direction to form the light source installation area LA. The light source installation area LA is smaller than the total area of the empty areas LN. A ratio of an area of the light source installation area LA (the length in the Y-axis direction) to an area of an entire display (a vertical length of the display (a short-side length)) is greater than that in the first embodiment and is approximately 42 %, for example. Each of the two empty areas LN has substantially a same area. The cold cathode tube 40 is formed such that its longitudinal length is substantially equal to a horizontal dimension (a long-side dimension) of the display.

The light reflectance distribution of the diffuser 130 will be explained. As illustrated in FIGS. 18 and 19, the light reflectance of the diffuser 130 decreases in a continuous manner as is farther away from the middle portion to the end portions in the short-side direction. The light reflectance distribution is a normal distribution (a bell-shaped curve). Specifically, the light reflectance of the diffuser 130 is highest in the middle portion of the diffuser 130 in the short-side direction and lowest in the two end portions in the short-side direction. The highest value of the light reflectance is lower than that of the diffuser 30 of the first embodiment and is approximately 40 %, and the lowest value thereof is approximately 30 %. An area of the diffuser 130 that has a light reflectance higher than the light reflectance value obtained by adding the lowest value to a half value of the light reflectance value obtained by subtracting the lowest value from the highest value (for example, 35 %) corresponds to a half-value width area HW. A width of the half-value width area HW corresponds to a half-value width. If the maximum light reflectance is represented by Rmax and the minimum light reflectance is represented by Rmin, the portion of the diffuser 30 having the light reflectance Ra that satisfies the formula (2) described in the first embodiment corresponds to the half-value width area HW. On the other hand, the portion of the diffuser 130 having light reflectance equal to or less than the light reflectance value obtained by adding the lowest value to a half value of the light reflectance value obtained by subtracting the lowest value from the highest value (for example, 35 %), the portion of the diffuser 130 excluding the half-value width area HW corresponds to the non half-value width area NHW. If the maximum light reflectance is represented by Rmax and the minimum light reflectance is represented by Rmin, the portion of the diffuser 130 having the light reflectance Rb that satisfies the formula (3) described in the first embodiment corresponds to the non-half width area NHW.

A ratio of the half-value width to the short-side dimension of the diffuser 130 is greater than that of the diffuser 30 of the first embodiment, and is approximately 70%, for example. Namely, a middle area of approximately 70 % of an entire area of the diffuser 130 in the short-side direction corresponds to the half value width area HW and each end portion area of approximately 15 % of the entire area of the diffuser 130 in the short-side direction corresponds to the non half-value width area NHW. The half-value width area HW includes an entire area of the light source installation area LA (the light source overlapping portion DA) and a predetermined area in each empty area LN (each empty area overlapping portion DN) that is close to the light source installation area LA. Specifically, the half-value width area HW includes approximately a half area of each empty area LN and a ratio of the approximately half area of each empty area LN to the short-side length of the diffuser 130 is approximately 14 %. The non half-value width area NHW includes a predetermined area of each empty area LN that is close to the end of the diffuser 130 (the area opposite from the light source installation area LA). Specifically, the non half-value width area NHW includes approximately a half of each empty area LN and a ratio of the approximately half area of each empty area LN to the short-side length of the diffuser 130 is approximately 15 % as described before. A light reflectance distribution of the diffuser 130 according to the present embodiment is moderate compared to the light reflectance distribution of the diffuser 30 according to the first embodiment (see FIG. 8).

As illustrated in FIGS. 15 and 17, six cold cathode tubes 40 are arranged in parallel to each other and a pair of support members 20 is provided in the chassis 14 so as to sandwich the six cold cathode tubes 40. Specifically, each support member 20 is provided to be away with substantially an equal distance from each cold cathode tube 40 that is closest to the end of the chassis 14 and away with substantially an equal distance from a middle portion of the chassis 14 in the X-axis direction. The arrangement of the support members 20 in the chassis 14 is similar to that of the first embodiment. Each support member 20 is arranged in a portion of each empty area LN that overlaps the non half-value width area NWH of the diffuser 130. The support member 20 is provided in the end-side portion of approximately 15 % of the entire area of the chassis 14 in the short-side direction. Each support member 20 is provided such that an end of the main body 20a close to the cold cathode tube 40 is located substantially on a border between the half-value width area HW and the non half-value width area NHW. The each support member 20 is provided in a portion of the chassis 14 that overlaps the non half-value width area NHW that is close to the half-value width area HW, that is closest to the middle portion of the diffuser 130 in the short-side direction.

As described above, in the device including a plurality of cold cathode tubes 40 as the light source, the support members 20 are provided in the portions of the diffuser 130 that overlap the non half-value width area NHW. Even if some of the light directing toward the diffuser 130 may be blocked by the support member 20 in the chassis 14, the difference in the amount of rays of light transmitting through the portion in which light is blocked by the support member 20 and the portion in which light is not blocked by the support member 20 is less likely to be caused. Accordingly, the unevenness is less likely to be caused in the brightness distribution of illumination light that is exited from the diffuser 130. The cold cathode tubes 40 are used as the light source and this extends life of the light source and dimming is performed easily.

<Third Embodiment>

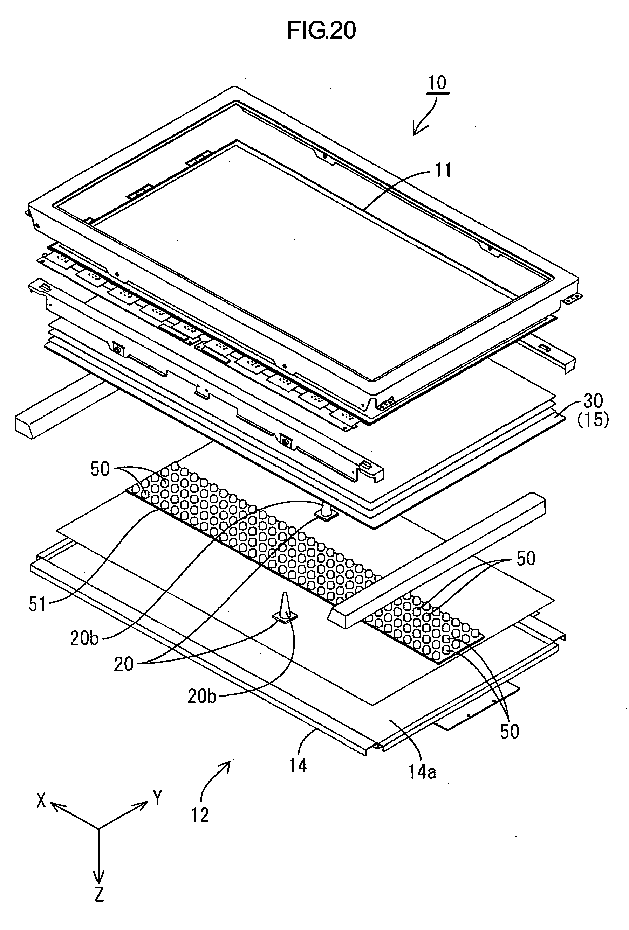

A third embodiment of the present invention will be explained with reference to FIGS. 20 to 24. In the third embodiment, LEDs 50 are used as the light source and other configurations are similar to the first embodiment. In the third embodiment, the same components and parts as the first embodiment are indicated by the same symbols and will not be explained.

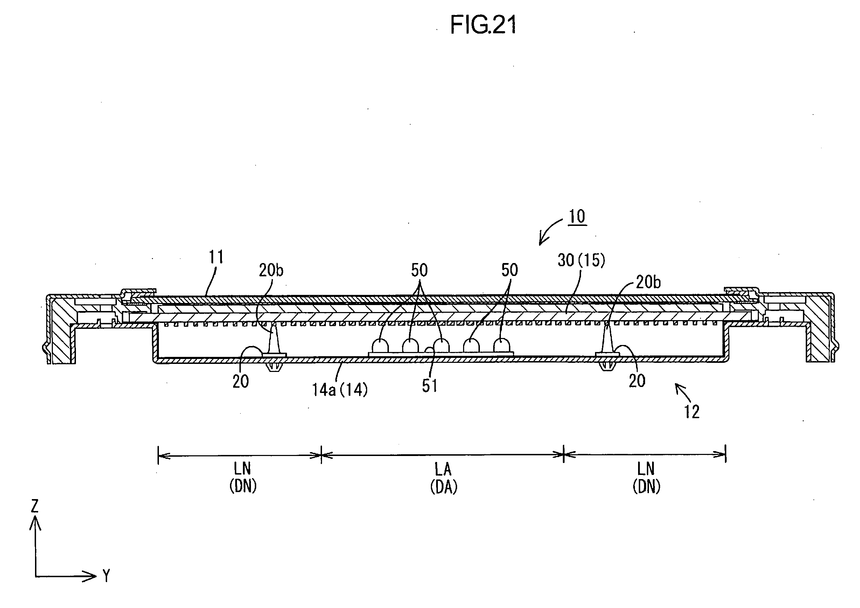

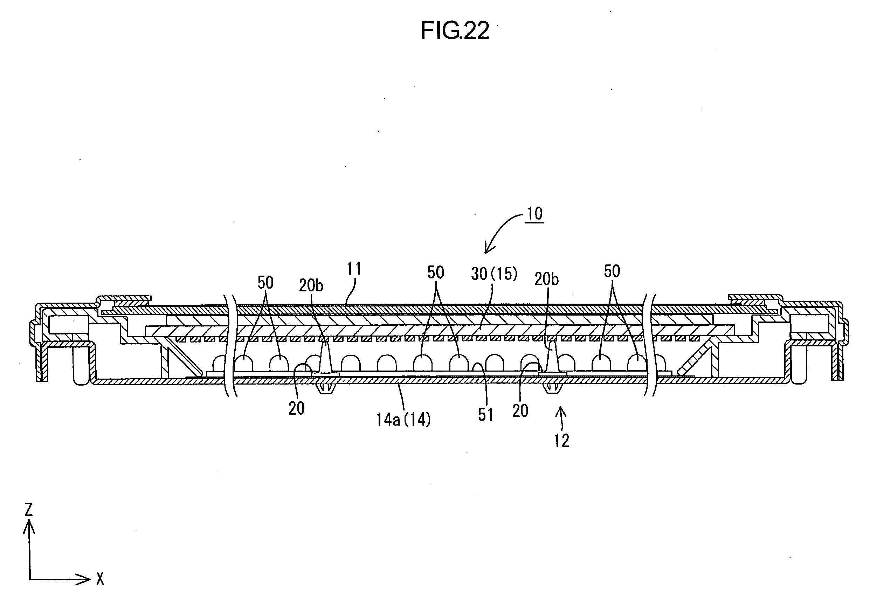

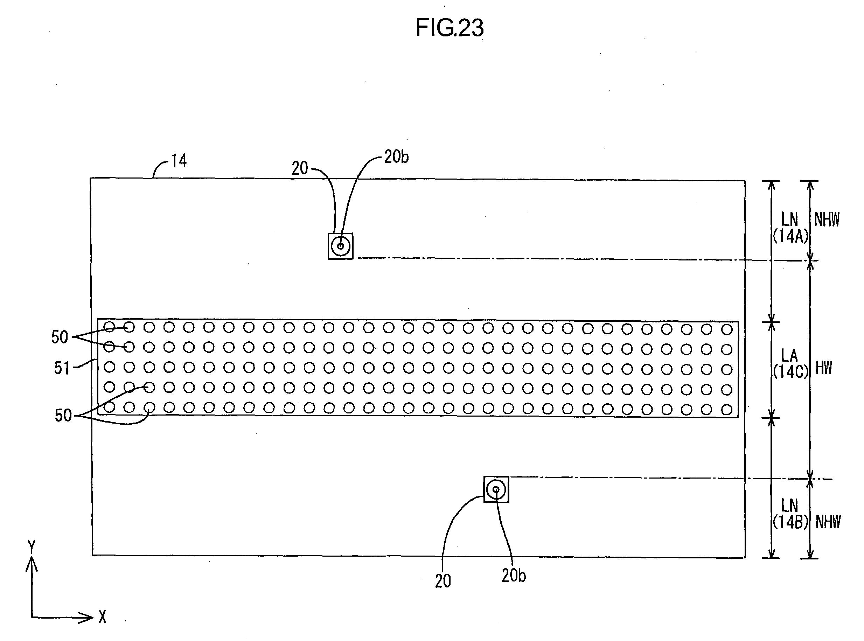

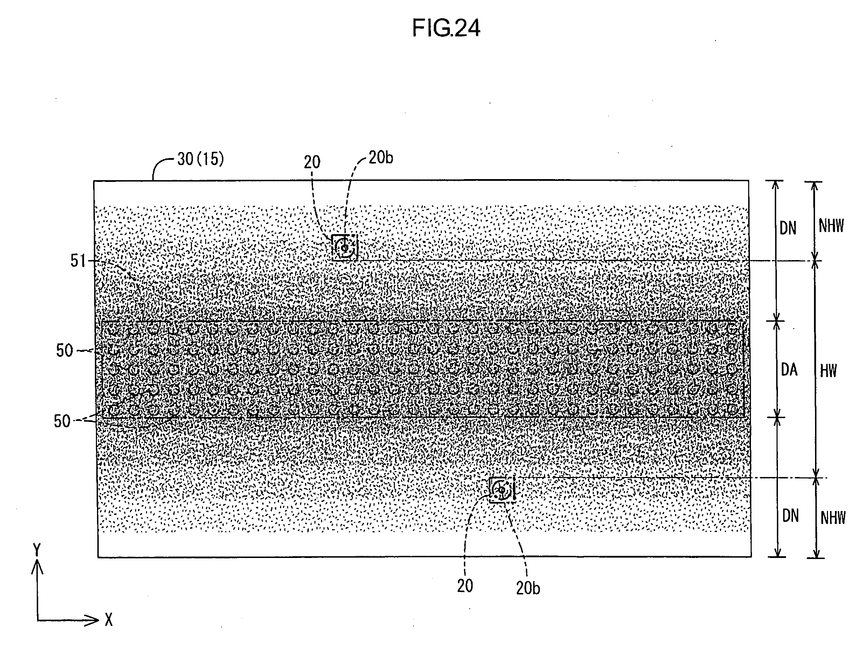

FIG. 20 is an exploded perspective view illustrating a general construction of a liquid crystal display device. FIG. 21 is a cross-sectional view of the liquid crystal display device along the short-side direction. FIG. 22 is a cross-sectional view of the liquid crystal display device along the long-side direction. FIG. 23 is a plan view illustrating a general construction of a chassis provided in the liquid crystal display device in FIG. 20. FIG. 24 is a plan view illustrating a light reflectance distribution of a diffuser included in the liquid crystal display device in FIG. 20.

As illustrated in FIGS. 20 to 22, a plurality of LEDs 50 that form the light source of the present embodiment area mounted on an LED board 51 that is housed in the chassis 14. The LED board 51 is made of resin and the surface thereof is inwhite that provides high light reflectivity. The LED board 51 extends along the bottom plate 14a of the chassis 14 and is fixed to the bottom plate 14a by fixing member (not illustrated). The LED board 51 is formed in a shape having a horizontally long rectangular plan view. The LED board 51 is mounted to the bottom plate 14a such that its long side matches the long side of the chassis 14. The LED board 51 has a short dimension smaller than the vertical dimension of the display screen (the short-side dimension of the chassis 14) and has a long dimension substantially equal to the horizontal dimension of the display screen (the long-side dimension of the chassis 14). Wiring patterns that are metal films are formed on the LED board 51 and the LEDs 50 are mounted in predetermined locations on the LED board 51. The LED board 51 is connected to an external control board (not shown). The control board is configured to feed currents for turning on the LEDs 50 and to perform driving control of the LEDs 50.

The LEDs 50 are surface-mounted to the LED boards 17, that is, the LEDs 50 are surface-mount LEDs. A number of LEDs 50 are arranged in a planar grid pattern in the X-axis direction and the Y-axis direction (in lines and columns) and on a front-side surface of the LED board 51. Each LED 50 includes a base board and LED chips. The base board is fixed to the LED board 51 and the LED chips are provided on the base board sealed with a resin member. The LED 50 includes three different kinds of the LED chips with different main emission wavelengths. Specifically, each LED chip emits a single color of light of red (R), green (G) or blue (B). The LED 50 is a top-type LED in which a light emitting surface is provided on a surface of the LED that is opposite from the mounting surface to the LED board 51. A light axis of the LED 50 substantially matches the Z-axis direction (a direction perpendicular to the plate surface of the liquid crystal panel 11 and the optical member 15).

The bottom plate 14a of the chassis 14 (a portion facing a diffuser 30) is defined in the short-side direction equally in a first end portion 14A, a second end portion 14B that is located at an end opposite from the first end portion 14A and a middle portion 14C that is sandwiched between the first end portion 14A and the second end portion 14B. The LED board 51 on which the LEDs 50 are mounted is arranged in the middle portion 14C of the bottom plate 14a and the light source installation area LA is formed in the middle portion 14C. On the other hand, no LED board 51 is arranged in the first end portion 14A and the second end portion 14B of the bottom plate 14a and the empty area LN is formed in the first end portion 14A and the second end portion 14B. Thus, the LEDs 50 and the LED board 51 are arranged in a middle portion of the bottom plate 14a of the chassis 14 in the short-side direction to form the light source installation area LA. A ratio of an area of the light source installation area LA (the length in the Y-axis direction) to an entire area of the display screen (the vertical dimension of the display screen (the short-side dimension)) can be altered if necessary. The ratio may be set to be same as that in the first embodiment or the second embodiment or may be set to a different value other than the values described in the first and second embodiments.

As illustrated in FIGS. 21 and 23, a pair of support members 20 is arranged in the chassis 14 so as to sandwich the LED board 51. Each of the support members 20 is arranged to be away with substantially an equal distance from the LED board 51 and to be away with substantially an equal distance from a middle portion of the chassis 14 in the X-axis direction. The arrangement of the support members 20 in the chassis 14 is similar to that of the first embodiment and the second embodiment. Each support member 2 0 is provided in a portion of the empty area LN that overlaps the non half-value width area NHW of the diffuser 30. The arrangement of the support members 20 similar to the first and second embodiments will not be explained.

As described above, the LEDs 50 are arranged in series on the LED board 51 as the light source. The support member 20 is arranged to overlap the non half-value width area NHW of the diffuser 30. Even if some of the light directing toward the diffuser 30 may be blocked by the support member 20 in the chassis 14, the difference in the amount of rays of light transmitting through the portion in which light is blocked by the support member 20 and the portion in which light is not blocked by the support member 20 is less likely to be caused. Accordingly, the unevenness is less likely to be caused in the brightness distribution of illumination light that is exited from the diffuser 30. The LEDs 50 are used as the light source and this extends life of the light source and achieves low power consumption.

<Other Embodiments>

The embodiments of the present invention have been described, however, the present invention is not limited to the above embodiments explained in the above description and the drawings. The following embodiments may be included in the technical scope of the present invention, for example.

(1) In the above embodiments, an entire area of the support member is provided in the portion of the chassis that overlaps the non-half width area. However, the arrangement of the support members in the chassis can be altered. For example, a part of the main body of the support member may be located in the portion of the chassis that overlaps the half-value width area and an entire area of the support portion may be located in the portion of the chassis that overlaps the non-half width area. A part of the main body and the support portion of the support member may be located in the portion of the chassis that overlaps the half width area. An entire area of the support portion of the support member may be located in the portion of the chassis that overlaps the half-value width area and a part of the main body may be located in the portion of the chassis that overlaps the non-half width area. An entire area of the support member may be located in a portion of the chassis that overlaps the non-half width area and an end of the main body close to the light source may be located in a portion closer to the portion that overlaps the non half-value width area from the border between the non half-value width area and the half-value width area. That is, the support members may be provided closer to the end of the chassis in the short-side direction compared to the above embodiments.

(2) In the above embodiments, each support member is located in the portion that overlaps the non half-value width area. For example, an entire area of one of the support members may be located in the portion that overlaps the non half-value width area and an entire area of another one of the support members may be located in the portion that overlaps the half-value width area. A part of one of the support members may be located in the portion that overlaps the non half-value width area and an entire area of another one of the support members may be located in the portion that overlaps the half-value width area. An entire area of one of the support members may be located in the portion that overlaps the non half-value width area and a part of another one of the support members may be located in the portion that overlaps the half-value width area.

(3) In the above embodiments, the support member is provided in the empty area. The support member may be provided in the light source installation area if the support member is located in the portion that overlaps the non half-value width area.

(4) In the above embodiments, the light source is provided to extend along the long-side direction (the X-axis direction) of the chassis, and the light source installation area and the empty areas are arranged in the short-side direction (the Y-axis direction), and the light reflectance of the diffuser changes in the short-side direction of the chassis. For example, the light source may extend in the short-side direction of the chassis (the Y-axis direction) and the light source installation area and the empty area may be arranged in the long-side direction of the chassis (the X-axis direction) and the light reflectance of the diffuser may change in the long-side direction of the chassis. In such a case, the half-value width area and the non half-value width area are arranged in the long-side direction of the chassis, and the arrangement of the support members may be altered according to the arrangement of the half-value width area and the non half-value width area.

(5) In the above embodiments, a pair of support members is arranged to be in a line that is slanted with respect to the X-axis direction and the Y-axis direction. However, the support members may be arranged in a line along the X-axis direction or may be arranged in a line along the Y-axis direction.

(6) Other than the above embodiments, the number of the support members in the chassis may be altered if necessary. One support member may be arranged in the chassis or three or more support members may be arranged in the chassis.

(7) The configuration of the diffuser of the first and second modifications of the first embodiment can be applied to the diffuser of the second and third embodiments.

(8) In the above embodiments, the middle portion of the chassis corresponds to the light source installation area and the first end portion and the second end portion area correspond to the empty areas. One of the first end portion and the second end portion may be the light source installation area and the rest may be the empty areas. In such a case, the first end portion and the middle portion may be the light source installation areas or the second end portion and the middle portion may be the light source installation areas.

(9) If the configuration of the light source installation area and the empty area is altered as described in (8), the light reflectance distribution of the diffuser can be altered accordingly. The light reflectance distribution is set such that the portion of the diffuser that overlaps the light source installation area has relatively high light reflectance and the portion of the diffuser that overlaps the empty area has relatively low light reflectance. In such a case, the light reflectance distribution may be different from a normal distribution.

(10) In the above embodiments, the support portion comes in contact with the diffuser that is flat in the X-axis direction and the Y-axis direction. However, the support portion may not come in contact with the flat diffuser (specifically, the distal end portion of the support portion is located closer to the light source than the surface of the diffuser close to the light source). With such a configuration, even if the diffuser is thermally expanded due to the thermal environmental change in the backlight device, the diffuser is allowed to be deformed to be warped toward the light source within a clearance range formed between the diffuser and the support portion. Accordingly, deflection or wrinkles are less likely to be caused in the diffuser and uneven brightness is less likely to occur in the illumination light exited from the diffuser.

(11) In the above embodiment, the support portion is formed in a tapered circular cone. However, the support portion may be formed in a tapered pyramid. The support portion may not be necessarily formed to be tapered but may be formed in a columnar shape or a prismatic column having a constant radial dimension.

(12) In the above embodiment, the support portion has a point-like shape in a surface area of the diffuser. However, for example, the support portion may have a linear shape in a surface area of the diffuser or may have a planer shape in a surface area of the diffuser.

(13) In the above embodiments, the stopper portion of an insertion type is used as a mounting structure of mounting the support portion to the chassis. However, a mounting structure of a sliding type may be used. The sliding-type mounting structure includes a main body and a stopper portion that is formed in a hook-shape. In such a sliding-type mounting structure, after being pressed toward the bottom plate of the chassis, the main body is slid along the bottom plate to engage the hook-shaped portion of the stopper portion to the edge portion of a mounting hole.

(14) In the above embodiments, the mounting structure of mounting the support member to the chassis includes the stopper member. The support member may not include the stopper member. In such a case, the support member may be mounted to the chassis with an adhesive layer between the main body and the bottom plate of the chassis or between the main body and the reflection sheet.

(15) In the above embodiments, the support member has a white surface. However, the support member may have a milky white surface or a silver surface. A coating material of a desired color may be coated over a surface of the support member to alter the surface color.

(16) Other than the above embodiments, the ratio of the half-value width to the short-side dimension of the diffuser may be altered and is preferably set in a range of 25 % to 80 %, for example. According to the change of the ratio of the non half-value width area and the ratio of the half-value width area, the arrangement of the support members can be altered. Specific values of the maximum light reflectance and the minimum light reflectance can be altered if necessary.

(17) In the above embodiments, each dot of the dot pattern of the light reflecting portion is formed in a round. However, the shape of each dot is not limited thereto but may be any shape such as an ellipsoidal shape or a polygonal shape.

(18) In the above embodiments, the light reflecting portion is printed on the surface of the diffuser. However, the light reflecting portion may be formed by other methods such as an evaporation method with metal.

(19) In the above embodiments, the light reflecting portion is formed on the surface of the diffuser to adjust the light reflectance in a surface area of the diffuser. However, the light reflectance of the diffuser may be adjusted as follows. The diffuser is generally configured by a transparent substrate and light scattering particles dispersed therein. The light reflectance of the diffuser is determined by a combination ratio (% by weight) of the light scattering particles to the transparent substrate. Namely, the light reflectance relatively increases by relatively increasing the combination ratio of the light scattering particles and the light reflectance relatively decreases by relatively decreasing the combination ratio of the light scattering particles.

(20) In the above embodiments, an area of each dot forming the light reflecting portion is changed to design and control the light reflectance of the diffuser. As control means for controlling the light reflectance, a distance between the dots each having a same area may be changed or dots each having different light reflectance may be formed. The dots may be formed with using a plurality kinds of materials having different light reflectance to form the dots each having different light reflectance.

(21) In the above embodiments, the light reflecting portion is formed on the diffuser of the optical member and the light reflectance of the light reflecting portion is controlled appropriately. The light reflecting portion may be formed on the optical member other than the diffuser and the light reflectance thereof may be controlled. The number and the kind of the diffuser and the optical sheet that is used as the optical member may be altered.

(22) In the first embodiment, one hot cathode tube is used as the light source. However, the number of the hot cathode tubes may be altered and may be two or more. Specifically, if two hot cathode tubes are used, the ratio of the light source installation area to the vertical dimension of the display screen is preferable to be approximately 37 %. If three or more hot cathode tubes are used, the ratio of the light source installation area may be adjusted to be proportional to the number of the hot cathode tubes.

(23) In the second embodiment, six cold cathode tubes are used as the light source. However, the number of the cold cathode tubes may be altered and may be five or less or may be seven or more. Specifically, if four cold cathode tubes are used, the ratio of the light source installation area to the vertical dimension of the display screen is preferable to be approximately 26 %. If eight cold cathode tubes are used, the ratio of the light source installation area to the vertical dimension of the display screen is preferable to be approximately 58 %. In case that the different number of cold cathode tubes are used, the ratio of the light source installation area may be adjusted so as to be proportional to the number of the cold cathode tubes.

(24) In the third embodiment, a size of the LED board with respect to the chassis and the arrangement positions and the number of the LEDs on the LED board may be altered.

(25) In the first and second embodiments, a hot cathode tube or a cold cathode tube that is a kind of a fluorescent tube (a linear light source) is used as the light source. Other kinds of fluorescent tubes may be used as the light source. Discharge tubes (such as mercury lamps) other than the fluorescent tubes may be used as the light source.

(26) In the third embodiment, an LED that is a kind of point light sources is used as the light source. Other kinds of point light source may be used as the light source. A planer light source such as an organic EL may be used as the light source.

(27) In the above embodiments, one kind of light source is used. A plurality kinds of light sources may be used. For example, a hot cathode tube and a cold cathode tube may be used in one device, or a hot cathode tube and LEDs may be used in one device, or a cold cathode tube and LEDs may be used in one device, or a hot cathode tube, a cold cathode tube and LEDs may be used in one device.

(28) Other than the above embodiments, a display screen size and a horizontal to vertical ratio of the display screen in the liquid crystal display device may be altered. For example, the liquid crystal display device (such as a chassis) is formed in a square with plan view.

(29) In the above embodiments, the liquid crystal panel and the chassis are arranged in a vertical position such that their short-side direction matches the vertical direction. However, the liquid crystal panel and the chassis may be arranged in a vertical position such that their long-side direction matches the vertical direction.

(30) In the above embodiments, TFTs are used as switching components of the liquid crystal display device. However, the technology described above can be applied to liquid crystal display devices including switching components other than TFTs (e.g., thin film diode (TFD)). Moreover, the technology can be applied to not only color liquid crystal display devices but also black-and-white liquid crystal display devices.

(31) In the above embodiments, the liquid crystal display device including the liquid crystal panel as a display panel. The technology can be applied to display devices including other types of display components.

(32) In the above embodiments, the television receiver including the tuner is used. However, the technology can be applied to a display device without a tuner.

EXPLANATION OF SYMBOLS

10: Liquid crystal display device (Display device), 11: Liquid crystal panel (Display panel), 12: Backlight device (Lighting device), 14: Chassis, 14b: Opening, 14A: First end portion, 14B: Second end portion, 14C: Middle portion, 15: Optical member, 17: Hot cathode tube (Light source), 20: Support member, 20b: Support portion, 30 Diffuser (Optical member), 31: Optical sheet (Optical member), 32: Light reflecting portion, 32a: Dot, 40: Cold cathode tube (Light source), 50: LED (Light source), DA: Light source overlapping portion (Portion that overlaps a light source installation area), DN: empty area overlapping portion (Portion that overlaps an empty area), LA: Light source installation area, LN: Empty area, NHW: Non half-value width area (Portion of the optical member having light reflectance R satisfying a formula (1)), TV: Television receiver.

**Claims**

1. A lighting device comprising:

   a light source;
   a chassis configured to house the light source and have an opening for light from the light source to pass through;
   an optical member provided to face the light source and cover the opening; and
   a support member configured to support the optical member on a side close to the light source, wherein:

      the chassis includes a portion that faces the optical member and is defined in a light source installation area in which the light source is arranged and an empty area in which no light source is arranged;
      the optical member has a surface that faces the light source and at least the surface of the optical member that overlaps the light source installation area has light reflectance higher than at least the surface of the optical member that overlaps the empty area; and
      the surface of the optical member that faces the light source has maximum light reflectance Rmax and minimum light reflectance Rmin, and the support member is provided in a portion that overlaps a portion of the optical member having light reflectance R that satisfies a following formula (1):

$$(Rmax - Rmin) / 2 + Rmin > R.$$

2. The lighting device according to claim 1, wherein:

   the chassis has a surface facing the optical member and at least the surface including a first end portion, a second end portion, and a middle portion, the second end portion being located at an end away from the first end portion, and the middle portion being located between the first end portion and the second end portion; and
   the middle portion is configured as the light source installation area, and the first end portion and the second end portion are configured as the empty areas.

3. The lighting device according to one of claims 1 and 2, wherein the optical member is configured such that the light reflectance of the surface that faces the light source decreases as is further away from the light source.

4. The lighting device according to any one of claims 1 to 3, wherein the support member is provided in the empty area.

5. The lighting device according to any one of claims 1 to 4, wherein the optical member includes a light reflecting portion on the surface that faces the light source, and the light reflecting portion is configured to reflect light.

6. The lighting device according to claim 5, wherein the light reflecting portion is configured to be formed in substantially a point-like shape in a surface area of the optical member that faces the light source and is configured by a plurality of dots having light reflectivity.

7. The lighting device according to any one of claims 1 to 6, wherein:

the optical member is formed in a rectangular shape with plan view; and
the support member includes at least two support members and the support members are arranged in the chassis in a line that is slanted with respect to each side of the optical member.

8. The lighting device according to any one of claims 1 to 7, wherein the support member includes a main body and a support portion, and the main body extends along the chassis and the support portion projects from the main body toward the optical member and is configured to come in contact with a surface of the optical member that faces the light source.

9. The lighting device according to claim 8, wherein at least the support portion of the support member is provided to overlap a portion of the optical member having the light reflectance that satisfies the formula (1).

10. The lighting device according to one of claims 8 and 9, wherein the support portion is formed in substantially a point-like shape in a surface area of the optical member.

11. The lighting device according to any one of claims 8 to 10, wherein the support portion is formed to be tapered.

12. The lighting device according to one of claims 1 to 11, wherein:

the chassis is formed in a rectangular shape with plan view;
the light source is formed to extend in a long-side direction of the chassis; and
the light source installation area and the empty area are provided in a short-side direction of the chassis.

13. The lighting device according to any one of claims 1 to 12, wherein the support member has a surface that provides white.

14. The lighting device according to any one of claims 1 to 13, wherein the light source is a hot cathode tube.

15. The lighting device according to any one of claims 1 to 13, wherein the light source is a cold cathode tube.

16. The lighting device according to any one of claims 1 to 13, wherein the light source is an LED.

17. A display device comprising:

the lighting device according to any one of claims 1 to 16; and
a display panel configured to provide display using light from the lighting device for a display device.

18. The display device according to claim 17, wherein the display panel is a liquid crystal display panel including liquid crystal between a pair of substrates.

19. A television receiver comprising the display device according to any one of claims 17 and 18.

FIG.1

TV

10

Cb

Ca

P

T

S

FIG.2

# FIG.3

EP 2 423 562 A1

# FIG.4

EP 2 423 562 A1

# FIG.5

EP 2 423 562 A1

FIG.6

## FIG.7

# FIG.8

FIG.9

FIG.10

EP 2 423 562 A1

# FIG.11

FIG.12

EP 2 423 562 A1

# FIG.13

## FIG.14

# FIG.15

# FIG.16

EP 2 423 562 A1

EP 2 423 562 A1

FIG.17

## FIG.18

FIG.19

# FIG.20

# FIG.21

EP 2 423 562 A1

FIG.22

FIG.23

EP 2 423 562 A1

FIG.24

EP 2 423 562 A1

| **INTERNATIONAL SEARCH REPORT** | International application No. |
|---|---|
| | PCT/JP2010/054194 |

**A. CLASSIFICATION OF SUBJECT MATTER**
*F21S2/00*(2006.01)i, *G02F1/13357*(2006.01)i, *F21Y103/00*(2006.01)n

According to International Patent Classification (IPC) or to both national classification and IPC

**B. FIELDS SEARCHED**

Minimum documentation searched (classification system followed by classification symbols)
F21S2/00, G02F1/13357, F21Y103/00

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-117023 A (Sony Corp.), 28 April 2005 (28.04.2005), paragraph [0096]; fig. 13 (Family: none) | 1-19 |
| A | WO 2004/031647 A1 (Sharp Corp.), 15 April 2004 (15.04.2004), page 15, lines 27 to 45; fig. 11 & JP 4176106 B & JP 2008-270214 A & US 2006/0044830 A1 & EP 1564479 A1 & TW 231393 B | 1-19 |
| A | JP 2005-17691 A (Sanyo Electric Co., Ltd.), 20 January 2005 (20.01.2005), page 4, line 46 to page 5, line 2; fig. 2 (Family: none) | 1-19 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31 May, 2010 (31.05.10) | 08 June, 2010 (08.06.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006114445 A